Europäisches Patentamt

European Patent Office

Office européen des brevets

(19)

(11) **EP 1 380 981 A1**

(12) **EUROPEAN PATENT APPLICATION**

(43) Date of publication:
**14.01.2004 Bulletin 2004/03**

(51) Int Cl.⁷: **G06F 17/60**

(21) Application number: **03015571.7**

(22) Date of filing: **11.07.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **11.07.2002 JP 2002202078
11.07.2002 JP 2002202099
16.07.2002 JP 2002206556
18.07.2002 JP 2002209715**

(71) Applicant: **Ricoh Company
Tokyo 143-8555 (JP)**

(72) Inventors:
• **Ikezawa, Toyoji
Yokohama-shi, Kanagawa 227-0066 (JP)**

• **Misawa, Yasuaki
Chuo-ku, Tokyo 104-0061 (JP)**
• **Taruta, Hiroumi, Tokyo RICOH Co., Ltd.,
Chuo-ku, Tokyo 104-0061 (JP)**
• **Azuma, Nobuyuki, c/o Tokyo RICOH Co., Ltd.,
Chuo-ku, Tokyo 104-0061 (JP)**
• **Higuchi, Toshiro, c/o Tokyo RICOH., Ltd.,
Chuo-ku, Tokyo 104-0061 (JP)**
• **Kouda, Shoichiro, c/o Tokyo RICOH Co., Ltd.,
Chuo-ku, Tokyo 104-0061 (JP)**
• **Suga, Tadaaki
Chuo-ku, Tokyo 104-0061 (JP)**

(74) Representative: **Schwabe - Sandmair - Marx
Stuntzstrasse 16
81677 München (DE)**

(54) **Sales activity support system, sales activity support information providing system, sales activity evaluation system, recording medium, and program**

(57) An activity plan generation unit (11) generates an activity plan for each salesperson based on an action pattern including a work objective and performance time obtained by analyzing a sales activity of a high performance salesperson, registers the plan in an activity plan DB (16), and notifies the plan to the salesperson and his/her supervisor. An information collection/registration unit (12) stores an activity achievement input by a salesperson in an activity achievement DB (17). A progress management unit (13) determines whether there is difference between an activity plan of a salesperson stored in the activity plan DB (16) and an activity achievement stored in the activity achievement DB (17). When determining that there is difference between them, the progress management unit (13) makes the activity plan generation unit (11) again select an appropriate action pattern and correct the activity plan, and notifies the difference to the supervisor of the salesperson.

Fig.1

EP 1 380 981 A1

**Description**

The present invention relates to a sales activity support system, a sales activity support information providing system, a sales activity evaluation system, a recording medium and a program for realizing efficient sales activities.

Conventionally, a salesperson has relied upon his/her personal opinions and experiences when determining the priority of deals with clients, and has performed sales activities to win the deal with each client.

Meanwhile, each company has proceeded with introduction of a SFA (Sales Force Automation) system to efficiently conduct sales activities from a company-wide aspect. The objective of this SFA system is to unitarily cumulate and manage useful information retained salesperson by salesperson or sales-division by sales-division, to share the information among all sales divisions and improve company-wide sales performance.

However, how to reflect such useful information on a salesperson's individual sales activities is left to the salesperson him/herself. Further, abilities of salespersons, such as sales skills and experiences vary, and therefore some salespersons can not work out a sales activity plan of their own all at once even by using the SFA system. As a result, the SFA system is not fully used, and salespersons make a daily sales activity plan based on their convenience and experiences as before.

There lies a problem that it is difficult for an ordinary salesperson to carry out sales activities efficiently for many deals.

There is also a problem that similar inefficiency comes about when a salesperson decides on a target client with whom the salesperson is going to make a deal. This is because deciding a target client is also up to each salesperson, and the SFA system is not efficiently used. This is also because a manager, who is the supervisor of each salesperson can not figure out the necessary steps to take to win the decided target client and therefore can not give appropriate advice to each salesperson.

Furthermore, the salesperson visits the decided target client and carries out negotiation using self-prepared sales promotion tools (for example, information suited to the client). In some case, whether such sales promotion tools are appropriate or not decides whether the salesperson succeeds in winning a new deal with the target client.

However, how to prepare and utilize sales promotion tools greatly depends on each salesperson's know-how. Even the SFA system has not yet been able to systematize each salesperson's know-how for common use. Therefore, there is a problem that sales activities for gaining a new deal with a target client can not be performed efficiently.

From another aspect for performing efficient sales activities, there is a need for a quantitative method for evaluating the content of sales activities of each salesperson. The evaluation results should preferably be reflected on sales activities. However, indices for quantitatively evaluating sales activities of each salesperson are only set toward the number of times the salesperson should visit the target client. Therefore, such indices may not improve efficiency of sales activities because some salespersons might increase unnecessary visits to get over the set target number.

Further, the manager supervising each salesperson can not accurately evaluate the sales activities of each salesperson with only the target number of visits, and can not therefore take appropriate actions such as giving advice suitable for each salesperson. The problem in here is that it is difficult to find out troubles that disturb efficient sales activities and to propose specific solutions since a method for quantitatively evaluating the contents of sales activities of each salesperson has not yet been established.

The present invention was made in view of the above circumstances, and an object of the present invention is to provide a sales activity support system, a sales activity support information providing system, a sales activity evaluation system, a recording medium and a program for realizing efficient sales activities.

To achieve the above object, a sales activity support system according to a first aspect of the present invention comprises:

a client information storage unit (14) which stores client information and business deal information on a business deal of the client;
an action pattern storage unit (15) which stores an action pattern made up of a work objective and a performance time which are obtained by analyzing a sales activity of a high performance salesperson;
a contact information storage unit (18) which stores contact information of concerned people who are to support a sales activity; and
an activity plan creation unit (11) which creates an activity plan for each business deal based on an action pattern selected from the action pattern storage unit (15) in accordance with the business deal information stored in the client information storage unit (14), and notifies the created activity plan to the concerned people registered in the contact information storage unit (18).

According to the above structure, since an activity plan is created based on an action pattern stored by analyzing a sales activity of a high performance salesperson, even an unskilled salesperson can be expected to achieve a result of a predetermined level. Therefore, it is possible to improve the efficiency of sales activities of all salespersons, and improve work performance.

The sales activity support system may further comprise: an activity plan storage unit (16) which stores the created activity plan; an activity achievement storage unit (17) which stores an actually performed sales activity of a salesperson; and a progress management unit (13) which compares the activity plan stored in the activity plan storage unit (16) with the actually performed sales activity stored in the activity achievement storage unit (17) for each business deal, and if there is a difference between the activity plan and the actually performed sales activity, notifies the difference to a supervisor of a salesperson in charge of the business deal.

Due to this, since the supervisor can understand the activity plan and a performance result of each salesperson on a daily basis, he/she can give appropriate advice to each salesperson.

In a case where the progress management unit (13) determines that there is a difference between an activity plan and an actually performed sales activity as to a given business deal, the activity plan creation unit (11) may again select an appropriate action pattern from the action pattern storage unit (15) and correct the activity plan.

Each time actually performed sales activity information stored in the activity achievement storage unit (17) is updated, the activity plan creation unit (11) may select an appropriate action pattern from the action pattern storage unit (15), and create an updated activity plan.

The activity plan creation unit (11) may calculate an appropriate cycle of visits for each business deal based on the performance time stored in the action pattern storage unit (15), determine a visiting date and an objective of visit for at least a next visit and visits thereafter, and notify the determined visiting date and objective of visit to the concerned people stored in the contact information storage unit (18).

Due to this, since a visiting date set for a salesperson is notified to people concerned, the salesperson can perform a sales activity having no lack, and meaningless visits can be reduced.

The activity plan creation unit (11) may notify the concerned people whether to visit a client on the visiting date itself or on a later date, based on a sales activity experience and know-how of a salesperson.

To achieve the above object, a sales activity support system according to a second aspect of the present invention comprises:

action pattern storage means (15) for storing an action pattern made up of a work objective and a performance time which are obtained by analyzing a sales activity of a high performance salesperson; and
activity plan creation means (11) for creating an activity plan based on the work objective and performance time stored in the action pattern storage means (15) for each business deal, and notifying the created activity plan to a salesperson who is in charge of the business deal and to his/her supervisor.

To achieve the above object, a sales activity support system according to a third aspect of the present invention comprises:

a business deal information storage unit (52) which stores business deal information representing a content of a business deal client by client;
a step number calculation unit (41) which determines an importance degree of each business deal based on the business deal information, sets a client target in accordance with the importance degree of a business deal, calculates an activity plan step number representing a number of steps necessary for sales activities for the set client target, and notifies the activity plan step number to a salesperson who is in charge of the client target and to his/her manager.

According to the above structure, a client having a business deal important for the company can be targeted, and a salesperson can concentrate on this important client. Therefore, meaningless visits can be reduced, efficiency of sales activities of the entire sales division can be improved, and work performance can be improved.

The sales activity support system may further comprise a client information storage unit (49) which stores client information regarding a client. The step number calculation unit (41) may determine an importance degree of a business deal based on client information stored in the client information storage unit (49) and regarding a client corresponding to the business deal, and a scale and a success possibility of the business deal which are stored in the business deal information storage unit (52).

The sales activity support system may further comprise an action pattern storage unit (53) which stores an action pattern made up of a work objective and a performance time which are obtained by analyzing a sales activity of a high performance salesperson. The step number calculation unit (41) may extract the performance time stored in the action pattern storage unit (53), and calculate the activity plan step number by multiplying the performance time by a coefficient corresponding to a value for calculating profits and losses of each business deal.

The step number calculation unit (41) may determine whether or not a total of the activity plan step number for a salesperson exceeds a performable step number of the salesperson representing a number of steps performable in a predetermined period, and in a case where determining that the total of the activity plan step number exceeds the performable step number, may assign excessive steps to another suitable salesperson based on the business deal information in order to restrict the total of the activity plan step number of the salesperson to within the performable step number.

Due to this, since excessive activity steps of a salesperson who shoulders many important business deals can be assigned to another suitable salesperson, work performance of the entire sales division can be improved without missing business chance.

The step number calculation unit (41) may determine a rank representing a priority level for each business deal based on the client information and the business deal information, and sequentially exclude a business deal having a lower rank than others from the activity plan step number of the salesperson.

The sales activity support system may further comprise: an activity step number storage unit (51) which stores an actually performed step number representing a number of steps actually performed by a salesperson and the activity plan step number in association with each other; and a progress management unit (48) which determines for each business deal whether or not there is a difference between the actually performed step number and the activity plan step number, when the actually performed step number stored in the activity step number storage unit (51) is updated. In a case where the progress management unit (48) determines that there is a difference between the actually performed step number and the activity plan step number, the progress management unit (48) may notify the business deal information of the corresponding business deal to a manager of a salesperson who is in charge of the business deal.

To achieve the above object, a sales activity support information providing system according to a fourth aspect of the present invention comprises:

a client information storage unit (61) which stores client information including individual information representing characteristics of a client;
an example storage unit (62) which stores an example corresponding to a business deal in association with the individual information;
an input reception unit (60a) which receives an input of client information for specifying a client from a terminal (3);
an extraction unit (60b) which extracts individual information of a client corresponding to the input client information from the client information storage unit (61), and extracts an example associated with the extracted individual information from the example storage unit (62); and
a sending unit (60c) which sends sales activity support information including the extracted individual information and example to the terminal (3).

According to the above structure, an optimum tool including individual information and an example corresponding to a client is provided to a salesperson. Therefore, the salesperson can effectively carry a negotiation using the optimum tool which can attract interests of the client. Accordingly, the efficiency of the sales activity of the salesperson can be improved.

To achieve the above object, a sales activity support information providing system according to a fifth aspect of the present invention is a system in which a terminal apparatus (3) and a server apparatus (60) for providing sales activity support information are connected through a network (1), characterized in that the server apparatus (60):

is structured so as to be able to access a client information database (61) which stores client information including individual information representing characteristics of a client, and an example database (62) which stores an example corresponding to a business deal in association with the individual information; and
comprises
an input reception unit (60a) which receives an input of client information for specifying a client from the terminal apparatus (3),
an extraction unit (60b) which extracts individual information of a client corresponding to the input client information from the client information database (61), and extracts an example associated with the extracted individual information from the example database (62), and
a sending unit (60c) which sends sales activity support information including the extracted individual information and example to the terminal apparatus (3).

It is preferred that the individual information includes at least one of a business field, a model type of a product used, a business scale, and an information technology introduction level representing a degree to which introduction of information technology is forwarded.

The server apparatus (60) may register a sales activity result input from the terminal apparatus (3) to the example database (62) as an example.

It is preferred that the example is a success example.

When the server apparatus (60) receives an input of client information for specifying a client from the terminal apparatus (3), it is preferred that the server apparatus (60) receives an input of a scheduled visiting date on which the client specified by the client information will be visited, and sends the sales activity support information to the terminal apparatus (3) before the scheduled visiting date.

The server apparatus (60) may send the sales activity support information on a desired sending date which is set before the scheduled visiting date in accordance with an instruction from the terminal apparatus (3).

The example database (62) may store client-related information regarding interests and concerns of a client in association with the individual information, and the server apparatus (60) may extract client-related information of a client corresponding to client information received by the input reception unit (60a) from the example database (62), and send the extracted client-related information to the terminal apparatus (3).

When the server apparatus (60) receives an input of client information for specifying a client from the terminal apparatus (3), the server apparatus (60) may receive a change of a negotiation condition relating to a business deal of the client specified by the input client information, and send sales activity support information adjusted to the changed condition to the terminal apparatus (3).

The server apparatus (60) may further comprise a selection unit (60d) which selects an appropriate sales means for each client, and the selection unit (60d) may select an appropriate sales means based on client information received by the input reception unit (60a), and provide a material for leading a client specified by the received client information to having a negotiation to the client through the selected sales means.

It is preferred that the sales means is constituted by at least one of door-to-door sales, sales through the internet, telephone, and facsimile, or combination of these.

When the server apparatus (60) provides the material to the client through a sales means other than door-to-door sales, the server apparatus (60) may determine whether or not to classify a business deal of the client as a business deal for which a negotiation should be performed based on a reply from the client to the provided material, and in a case where determining to classify the client's business deal as a business deal for which a negotiation should be performed, may send the determination to the terminal apparatus (3).

Due to this, not only door-to-door sales, but also other sales channels can be effectively used in accordance with a client. Therefore, time spent on gaining a business deal can be reduced, and efficiency of sales activities can be improved.

To achieve the above object, a sales activity support information providing method according to a sixth aspect of the present invention comprises:

a client information storing step of storing client information including individual information representing characteristics of a client;
an example storing step of storing an example corresponding to a business deal in association with the individual information;
a client information inputting step (S1) of receiving an input of client information for specifying a client from a terminal;
an extracting step (S2) of extracting individual information of a client corresponding to the client information received in the client information inputting step (S1) from client information stored in the client information storing step, and extracting a success example corresponding to the extracted individual information from examples stored in the example storing step;
a tool generating step (S3) of generating an optimum tool representing sales activity support information including the extracted individual information and success example; and
a sending step (S6) of sending the optimum tool generated in the tool generating step (S3) to the terminal.

The sales activity support information providing method may further comprise: a schedule inputting step of receiving an input of a scheduled visiting date on which a client will be visited from the terminal; and a sending date setting step (S5) of setting a date on which the optimum tool should be sent, based on the scheduled visiting date input in the schedule inputting step. In the sending step (S6), the optimum tool may be sent on a sending date set in the sending date setting step (S5).

To achieve the above object, a sales activity evaluation system according to a seventh aspect of the present invention comprises:

a sales activity information storing unit (81) which stores sales activity information including achievement data relating to a business deal and/or a sales activity;
an evaluation item setting unit (80a) which sets an evaluation item for evaluating a business deal and/or a sales activity salesperson by salesperson; and
an evaluation index setting unit (80b) which sets an evaluation index representing a quantitative evaluation result for the set evaluation item salesperson by salesperson, based on the achievement data stored in the sales activity information storing unit (81),

characterized in that a sales activity of each salesperson is evaluated based on the set evaluation index.

According to the above object, an evaluation index representing a quantitative evaluation result is set for an evaluation item for evaluating a business deal and/or a sales activity salesperson by salesperson. Since a sales activity of each salesperson is objectively evaluated based on the quantitative evaluation index, each salesperson can easily improve the efficiency of sales activities.

To achieve the above object, a sales activity evaluation system according to an eighth aspect of the present invention is a system in which a terminal apparatus (7, 9) and a server apparatus (80) for evaluating a sales activity of a salesperson are connected through a network (1),

characterized in that

the server apparatus (80):
is structured so as to be able to access a sales activity information database (81) which stores sales activity information including achievement data relating to a business deal and/or a sales activity which is input from the terminal apparatus (7);
comprises
an evaluation item setting unit (80a) which sets an evaluation item for evaluating a business deal and/or a sales activity salesperson by salesperson, and
an evaluation index setting unit (80b) which sets an evaluation index representing a quantitative evaluation result for the set evaluation item salesperson by salesperson, based on the achievement data stored in the sales activity information database (81); and
evaluates a sales activity of each salesperson based on the set evaluation index.

The evaluation index setting unit (80b) may set the evaluation index for an evaluation item relating to a business deal which is set by the evaluation item setting unit (80a), based on achievement data relating to the business deal which is stored in the sales activity information database (81).

Due to this, an evaluation index is set based on an activity achievement of a salesperson. Therefore, the salesperson can determine that the evaluation result for his/her own sales activity is rational, and therefore can reflect the evaluation result on future sales activities. Further, since the gap between an evaluation result based on an evaluation index and daily sales activities of a salesperson is revealed, the manager can conduct a more specific management.

The server apparatus (80) may be structured so as to be able to access an individual information database (82) which stores individual information representing attribute information of each salesperson, and the evaluation index setting unit (80b) may set the evaluation index for the evaluation item, based on achievement data relating to a predetermined business deal which is stored in the sales activity information database (81) and individual information stored in the individual information database (82).

Due to this, since an evaluation index is set in consideration of a skill level of each salesperson and situations of competition in the assigned district together with achievement data, a more accurate evaluation can be performed.

The evaluation index setting unit (80b) may set the evaluation index for an evaluation item relating to a sales activity which is set by the evaluation item setting unit (80a), based on achievement data relating to the sales activity which is stored in the sales activity information database (81).

the server apparatus (80) may further comprise an activity pattern generation unit (80c) which extracts achievement data corresponding to an evaluation item set by the evaluation item setting unit (80a) from among achievement data relating to a sales activity of each salesperson stored in the sales activity information database (81), and generates an activity pattern representing a content of an activity to be performed by the salesperson based on the extracted achievement data, and may classify the activity pattern generated by the activity pattern generation unit (80c) based on a result of a sales activity corresponding to the activity pattern, and stores the classified activity pattern in the sales activity information database (81) salesperson by salesperson.

Due to this, each salesperson's sales activity is evaluated by patterning his/her sales activity based on achievement data of the salesperson. Therefore, each salesperson and his/her manager can easily grasp the salesperson's activity tendency as to what kind of sales activity the salesperson performs.

The server apparatus (80) may extract an activity pattern of a successful sales activity from among activity patterns stored in the sales activity information database (81), and the evaluation index setting unit (80b) may set the evaluation index for an evaluation item included in the extracted activity pattern.

Due to this, an evaluation index set for a success pattern of a successful sales activity can be reflected on an activity pattern of another salesperson. Therefore, it is possible to improve work performance of the entire sales division.

The evaluation index setting unit (80b) may set the evaluation index for an evaluation item set by the evaluation item setting unit (80a), based on achievement data relating to a sales activity which is stored in the sales activity information database (81) and individual information stored in the individual information database (82).

It is preferred that the server apparatus (80) further comprises a determination unit (80d) which determines whether or not an activity pattern generated by the activity pattern generation unit (80c) needs to be corrected, based on an evaluation index set for an evaluation item included in the activity pattern.

In a case where the determination unit (80d) determines that the activity pattern needs to be corrected, the server apparatus (80) it is preferred that sends alarm information for prompting correction of the activity pattern of a corresponding salesperson to the terminal apparatus (7, 9).

The server apparatus (80) may be structured so as to be able to access an improvement information database (83) which stores improvement information representing a measure for improving a sales activity corresponding to the activity pattern generated by the activity pattern generation unit (80c), and in a case where the determination unit (80d) determines that the activity pattern needs to be corrected, the server apparatus (80) may extract the improvement information corresponding to the activity pattern from the improvement information database (83), and send the extracted improvement information to the terminal apparatus (7, 9).

Due to this, in a case where an activity pattern which might lead to drop of work performance is presented, alarm information for prompting correction of the activity pattern and a measure for improving the activity pattern are sent to a salesperson and his/her manager. Therefore, it is possible to quickly and appropriately correct a sales activity of the salesperson.

The server apparatus (80) may send an evaluation result for a business deal and/or a sales activity which includes an evaluation item for which an evaluation index is set by the evaluation index setting unit (80b), to the terminal apparatus (7, 9).

To achieve the above object, a sales activity evaluation method according to a ninth aspect of the present invention comprises:

a sales activity information storing step (S 11, S21) of storing sales activity information including achievement data relating to a business deal and/or a sales activity;

an evaluation item setting step of setting an evaluation item for evaluating a business deal and/or a sales activity salesperson by salesperson;

an evaluation index setting step of setting an evaluation index representing a quantitative evaluation result for an evaluation item set in the evaluation item setting step salesperson by salesperson, based on the achievement data stored in the sales activity information storing step (S11, S21); and

a step of evaluating a sales activity of each salesperson based on an evaluation index set in the evaluation index setting step.

The sales activity evaluation method may further comprise an individual information acquiring step (S13, S23) of acquiring individual information representing attribute information of each salesperson. In the evaluation index setting step, the evaluation index may be set based on the achievement data stored in the sales activity information storing step (S 11, S21) and the individual information acquired in the individual information acquiring step (S13, S23).

These objects and other objects and advantages of the present invention will become more apparent upon reading of the following detailed description and the accompanying drawings in which:

FIG. 1 is a block diagram showing an entire structure of a sales activity support system according to a first embodiment of the present invention;

FIG. 2 is an exemplary diagram for explaining an operation performed by the sales activity support system shown in FIG. 1 when creating an activity plan;

FIG. 3 is an exemplary diagram for explaining an operation performed by the sales activity support system shown in FIG. 1 when updating an activity plan;

FIG. 4 is a block diagram showing a hardware structure of a modification of the sales activity support system according to the first and a second embodiments, wherein the system is constituted by a single computer;

FIG. 5 is a block diagram showing an entire structure of a sales activity support system according to a second embodiment of the present invention;

FIG. 6 is an exemplary diagram showing an example of an activity step number table generated for each salesperson;

FIG. 7 is an exemplary diagram for explaining an operation performed by the sales activity support system shown in FIG. 5 when setting a customer target;

FIG. 8 is an exemplary diagram for explaining an operation performed by the sales activity support system shown in FIG. 5 when calculating an activity plan step number and distributing steps;

FIG. 9 is a block diagram showing an entire structure of a sales activity support information providing system according to a third embodiment of the present invention;

FIG. 10 is an exemplary diagram showing an example of an optimum tool provided by the sales activity support information providing system according to the third embodiment of the present invention;

FIG. 11 is a block diagram showing a modification of the sales activity support information providing system shown in FIG. 9;

FIG. 12 is a flowchart showing a flow of an operation performed by the sales activity support information providing system shown in FIG. 11;

FIG. 13 is a block diagram showing another modification of the sales activity support information providing system shown in FIG. 9;

FIG. 14 is a block diagram showing an entire structure of a sales activity evaluation system according to a fourth embodiment of the present invention;

FIG. 15 is an exemplary diagram showing an example of a KPI item list used in the sales activity evaluation system shown in FIG. 14;

FIG. 16 is a block diagram showing a modification of the sales activity evaluation system shown in FIG. 14; and

FIG. 17 is a block diagram showing another modification of the sales activity evaluation system shown in FIG. 14.

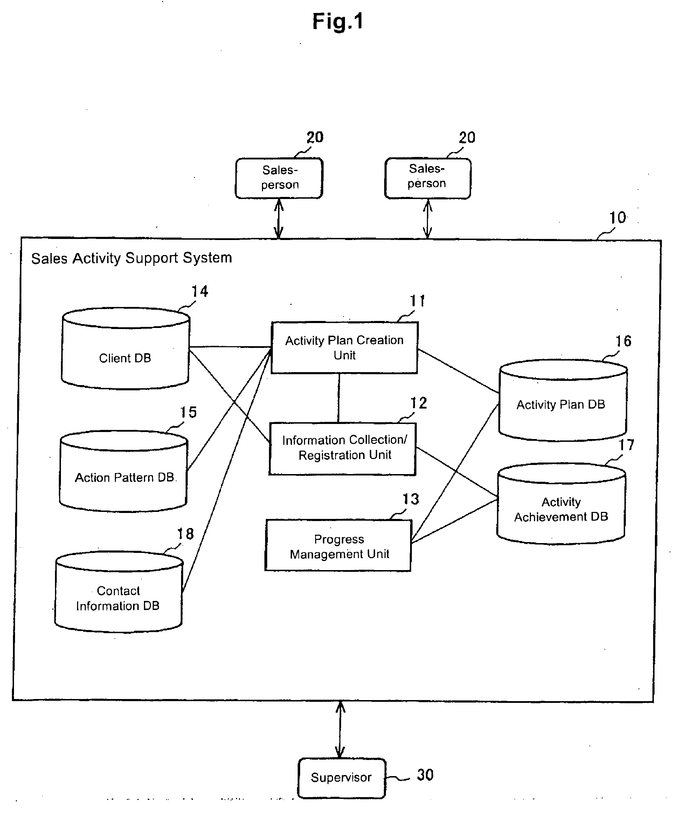

FIG. 1 is a block diagram showing the entire structure of a sales activity support system according to the present embodiment. As shown in FIG. 1, the sales activity support system 10 comprises an activity plan creation unit 11, an information collection/registration unit 12, a progress management unit 13, a client DB (database) 14, an action pattern DB 15, an activity plan DB 16, an activity achievement DB 17, and a contact information DB 18.

A salesperson and his/her supervisor gain access to the sales activity support system 10 having the above structure, using their own terminals (a salesperson terminal 20, a supervisor terminal 30).

Functions of the sales activity support system 10 can be realized by one computer, but may be realized by separate computers respectively. Each of the databases 14 to 18 may be accessed via a database server.

In order to simplify explanation, the sales activity support system 10 is assumed to be managed by a single server computer (a sales activity support server).

An arbitrary communication network can be used to connect the server computer, the databases, and the salesperson terminal 20 and supervisor terminal 30. For example, any of a LAN (Local Area Network), a WAN (Wide Area Network), and the internet utilizing a private line network and a public line network may be used.

With the use of the salesperson terminal 20, a salesperson registers information on a client and a business deal and other information helpful for sales activities that are obtained through a sales activity to a later-described database. Besides, the salesperson retrieves information on a client necessary for a sales activity, and registers and checks activity plans and activity achievements using the salesperson terminal 20.

The supervisor refers to activity plans and activity achievements of his/her subordinate salesperson, and thereby manages progresses and gives instructions.

The salesperson terminal 20 and the supervisor terminal 30 are personal computers respectively, however are not limited to these. For example, the salesperson terminal 20 and the supervisor terminal 30 may be PDAs (Personal Digital Assistants) or cellular phones.

The client DB 14 stores as information on a client, profiles of the client (name, address, division and name of a person in charge), corporate information (corporate scale, potentials, etc.), information on past business deals and business deals in progress (deal number, salesperson in charge, concerned product and its specification, gross sales margin, delivery method, agreed matters, agreed amount of payment, etc.), and information on other companies.

The action pattern DB 15 cumulates guidelines of sales activities for leading negotiation to success in accordance with maturity levels and product types, which guidelines are based on analysis of actions of high performance salespersons. A guideline includes work objectives to be performed at each maturity level (for example, determination of product specification, creation of a written estimate, presentation, etc.), information necessary for performing the work objectives, methods of performing the work objectives, standard performance time to be spent and standard number of visits to be paid to complete the work objectives.

Maturity levels are in line with progresses of a negotiation, and are a series of sales activities from preparation of negotiation till reaching an agreement that are arranged in the order of objectives. Specifically, the maturity levels are classified into nine levels, namely, gaining a footing, establishing relationship, researching circumstances, inducing interests, grasping needs, extracting problems, making a proposition, removing purchase restraining factors, and winning an order in the order of lower levels to higher levels.

The activity plan DB 16 stores a plan of sales activities to be performed in accordance with progress degrees of negotiation for each business deal, including a business deal number, work objectives in accordance with progress degrees of negotiation, planned time, and visiting schedule and its objective, etc.

The activity achievement DB 17 stores a business deal number, success possibility of negotiation, maturity level of negotiation progress, date of performance, comments on work performance, etc.

The contact information DB 18 stores contact information (e-mail address or phone number) of a salesperson and his/her supervisor together with contact information (e-mail address or phone number) of a specialized salesperson for each product and staff members who go together when visiting a client.

As described above, the activity plan creation unit 11, the information collection/registration unit 12, and the progress management unit 13 are constituted by a single server computer. A detailed explanation of the server computer will be omitted, however the server computer comprises a CPU (Central Processing Unit), a RAM (Random Access Memory) which provides a work area, and a ROM (Read Only Memory) storing programs for realizing the functions of the above-described units 11 to 13.

When the information collection/registration unit 12 registers a business deal in the client DB 14 as will be described later, the activity plan creation unit 11 determines an importance degree of the business deal based on information representing business deal situations (scale and potentials of a client, scale of business deal). The activity plan creation unit 11 selects a guideline close to a business deal having a high importance degree from the action pattern DB 15, and sets a work objective and period of performance at each maturity level based on the selected guideline. Then, the activity plan creation unit 11 calculates a cycle of visits optimum for each objective, and creates an activity plan by determining visiting dates and objectives of visits in accordance with this cycle of visits. The activity plan creation unit 11 registers the created activity plan in the activity plan DB 16.

The created activity plan is notified to a salesperson in charge of this business deal and his/her supervisor by e-mail, etc. Further, the activity plan creation unit 11 refers to the contact information DB 18 and notifies the created activity plan to a specialized salesperson and other staff members who should go together on a visiting date by e-mail, etc. beforehand, if such staff are needed in accordance with a work objective.

The information collection/registration unit 12 registers business deal information input from the salesperson terminal 20 and supervisor terminal 30 in the client information DB 14 in association with a client concerned, and registers activity achievements input therefrom in the activity achievement DB 17 business deal by business deal in accordance with a maturity level.

The registered information includes a business deal number, a maturity level, a date of activity, and comments on activity situation, etc. when the negotiation is at a low maturity level, and additionally includes success possibility of the negotiation, etc. as the maturity level goes up. Information representing the specification of a concerned product, gross sales margin, and delivery method is stored in the client DB 14 business deal by business deal.

The information collection/registration unit 12 registers information on other companies and problems that bother the client which are obtained through a sales activity performed by a salesperson to the client DB 14, and also registers a product specification and gross sales margin to the client DB 14 when negotiation with the client attains success.

When the information collection/registration unit 12 registers activity achievements in the activity achievement DB 17, the activity plan creation unit 11 recalculates the importance degree of a business deal, based on the business deal situation information stored in the activity achievement DB 17 (for example, scale and potential of the client, scale of business deal, success possibility, recall conditions, high maturity level), for each business deal stored in the client DB 14. The activity plan creation unit 11 reselects a guideline close to a business deal having a high importance degree from the action pattern DB 15, and sets a work objective and a period of performance for each maturity level based on the reselected guideline. The activity plan creation unit 11 again derives a cycle of visits optimum for each work objective, creates an updated activity plan by determining visiting dates and objectives of visits in accordance with the cycle of visits, and registers the created activity plan in the activity plan DB 16. Thereafter, the activity plan creation unit 11 repeats the above operations to update the activity plan, each time the information collection/registration unit 12 updates activity achievements stored in the activity achievements DB 17 as the negotiation advances.

The activity plan creation unit 11 extracts activity schedules and visiting schedules for the dates after the present date, and notifies works to be performed, visiting dates, visiting destinations, and objectives of visits, etc. to the people concerned beforehand. In this case, the activity plan creation unit 11 refers to a knowledge database (not shown) storing sales activity experiences and know-how, and notifies the people concerned whether to visit the client on the scheduled date or on a later date.

When the progresses of daily sales activities are input by the salesperson terminal 20 and activity achievements are registered by the information collection/registration unit 12 in the activity achievement DB 17, the progress management unit 13 determines whether or not there is any difference between the activity plan of the salesperson stored in activity plan DB 16 and the activity achievements registered in the activity achievement DB 17. In a case where the work to be performed on a planed date is not registered as an activity achievement in the activity achievement DB 17 or the reason for which the work ended in failure is registered in the activity achievement DB 17, the progress management unit 13 determines that there is difference between the activity plan and the activity achievement, and notifies the progress status registered in the activity achievement DB 17 to the supervisor terminal 30 by e-mail, etc.

In a case where determining that there is difference between the activity plan and the activity achievement, the progress management unit 13 further activates the activity plan creation unit 11 to select an appropriate guideline from the action pattern DB 15 based on the latest activity achievement (progress status) registered in the activity achievement DB 17 and correct the activity plan for the business deal concerned.

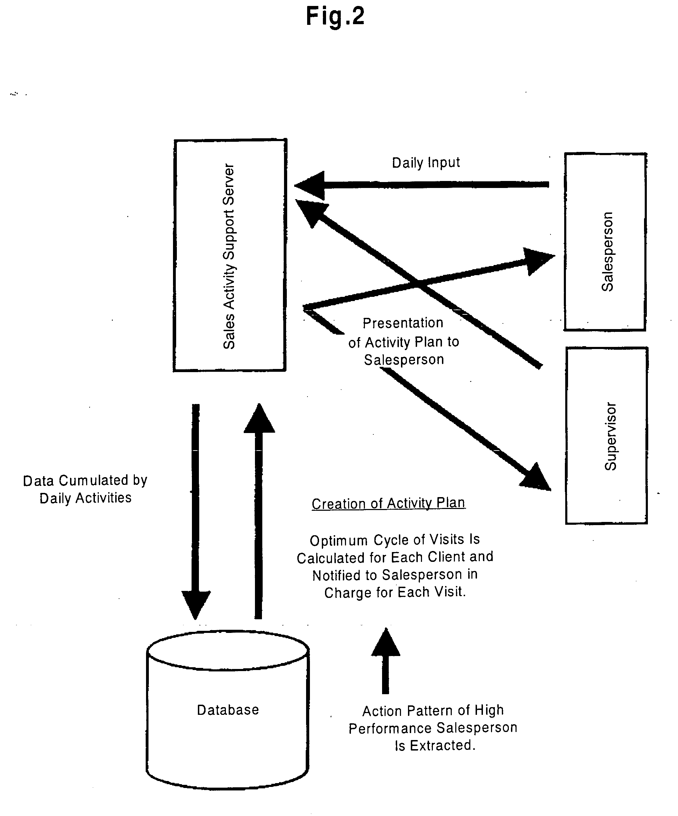

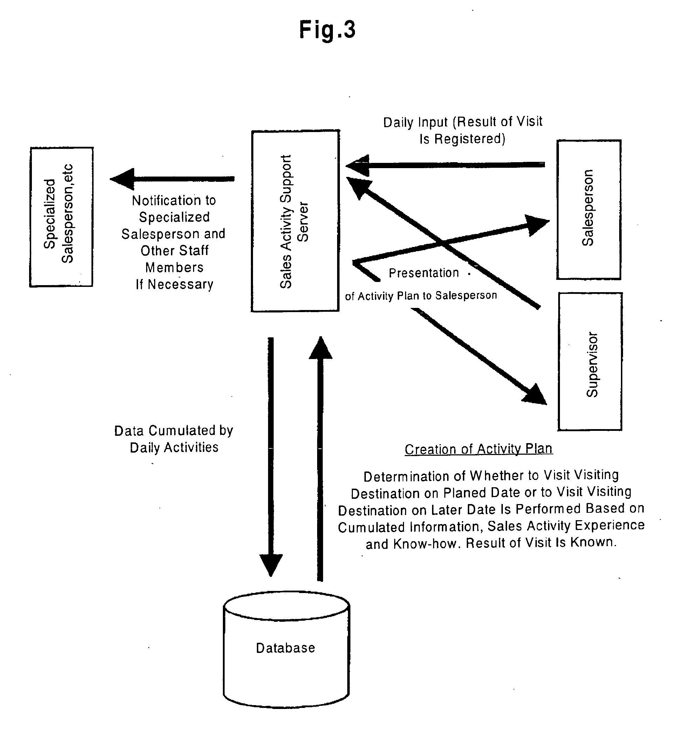

The operations of the respective units of the sales activity support system 10 having the above-described structure will now be explained with reference to FIG. 2 and FIG. 3. Note that in FIG. 2 and FIG. 3, the client DB 14, the action pattern DB 15, the activity plan DB 16, the activity achievement DB 17, and the contact information DB 18 are collectively displayed as a database.

When a business deal arises, a salesperson inputs this business deal by the salesperson terminal 20. The information collection/registration unit 12 of the sales activity support server registers business deal information regarding the input business deal in the database (client DB 14). The activity plan creation unit 11 creates an activity plan for the registered business deal, and notifies the activity plan to the salesperson in charge and his/her supervisor.

The importance degree is determined by the activity plan creation unit 11 for this activity plan based on the information representing business deal situations (scale and potential of the client and scale of the business deal, etc.). Also, a guideline close to a business deal having a high importance degree is selected from the action pattern DB 15 for this activity plan. A work objective and a period of performance for each maturity level are set based on this guideline, and an optimum cycle of visits is calculated for each work objective. The activity plan is created by determining visiting dates and objectives of visits in accordance with the cycle of visits, and is then registered in the activity plan DB 16.

Further, the activity plan creation unit 11 refers to the contact information Db 18 and notifies the activity plan to a specialized salesperson and other staff members who should go together on a visiting date by e-mail, etc. in advance if such staff are necessary in accordance with a work objective.

Next, the salesperson inputs a business deal number, a maturity level, a date of performance and comments on work performance, etc. by the salesperson terminal 20 when the process of approaching the client is still at a low maturity level. The information collection/registration unit 12 registers daily sales activities in the database (activity achievement DB 17) as a progress status (activity achievement) for each business deal. As the maturity level of the approach to the client advances, success possibility of negotiation is added to the progress status.

The information collection/registration unit 12 stores information on the specification of a concerned product, a gross sales margin, and delivery method, etc. in the business deal information in the database (client DB 14), in accordance with an input of the salesperson.

Information on other companies and problems of the client, etc. obtained through a sales activity of the salesperson is stored in the database (client DB 14) by the information collection/registration unit 12. In a case where the negotiation ends in success, the information collection/registration unit 12 stores the specification of the product achieving success and gross sales margin to the database (client DB 14).

When activity achievements are registered in the activity achievement DB 17 in response to an input operation of the salesperson, the activity plan creation unit 11 creates an updated activity plan based on business deal situation information (scale and potential of the client, scale of the business deal, success possibility, recall conditions, and high maturity level, etc.) stored in the database (activity achievement DB 17), for each business deal stored in the client DB 14. The activity plan creation unit 11 registers the updated activity plan in the database (activity plan DB 16), and notifies the activity plan to the people concerned. Update (correction) of an activity plan is performed also in a case where the progress management unit 13 compares the activity plan and the activity achievement for each business deal and determines that an activity period or a visiting date overpasses a planed deadline.

The activity plan creation unit 11 extracts plans of the days after the present date, and notifies the work to be performed, such as a visiting destination and an objective of visit, to the people concerned. In this case, the activity plan creation unit 11 refers to a knowledge database (not shown) storing sales activity experiences and know-how, and notifies the people concerned whether to visit the visiting destination on the planed date or on a later date.

The progress management unit 13 determines that there is difference between an activity plan and an activity achievement of a salesperson in a case where a work to be performed on a planed date is not registered in the activity achievement DB 17 as an activity achievement or a reason for which the work to be done ends in failure is registered in the activity achievement DB 17. In this case, the progress management unit 13 notifies the progress status to the supervisor of the salesperson by e-mail, etc. The supervisor gives advice to the salesperson in accordance with the contents of the e-mail.

As explained above, according to the sales activity support system of the present embodiment, information obtained through daily sales activities is stored and an activity plan created based on the stored information is notified to a salesperson concerned. Therefore, a salesperson can perform a sales activity having no lack.

Further, since a supervisor can know the activity plan and activity achievement of each salesperson on a daily basis, he/she can give appropriate advice to the each salesperson.

The sales activity support system of the present invention is not limited to the above first embodiment. For example, the whole sales activity support system may be structured by a single computer.

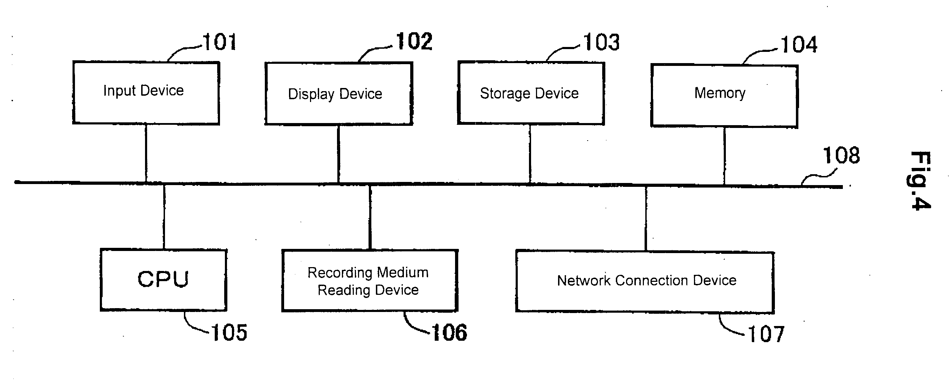

FIG. 4 is a block diagram showing a hardware structure of the sales activity support system in a case where it is realized by a single computer. The computer comprises an input device 101, a display device 102, a storage device 103, a memory 104, a CPU 105, a recording medium reading device 106, and a network connection device 107, which are connected with one another by a data bus 108.

The input device 101 is constituted by a keyboard, and a mouse or a touch panel. The input device 101 is used by a salesperson or a supervisor to input progress status of a sale activity and operation instructions. The display device 102 is constituted by a liquid crystal display device, etc. The display device 102 is used to display information input from the input device 101 and operation results, etc.

The storage device 103 stores data to be stored in the databases 14 to 18 described above. The memory 104 stores a program for realizing the functions of the units 11 to 13 included in the sales activity support server. The memory 104 is also used to retain information generated temporarily when the program is executed by the CPU 105. The CPU 105 controls the illustrated hardware and executes the above-described program. The recording medium reading device 106 has a recording medium storing a program and data attached thereto, reads the stored program and data therefrom, and stores them in the storage device 103 or the memory 104. The recording medium reading device 106 may be used to directly input and output data and to execute the program. The network connection device 107 is an interface for performing communications with other computers through a communication network.

According to the above first embodiment, it has been explained that the program for realizing the functions of the units 11 to 13 included in the sales activity support server is stored in a ROM not shown. Further, it has been explained that such a program is stored in the memory 104 in the computer shown in FIG. 4. However, for example, such a program may be written in a recording medium such as a CD-ROM in advance, and this CD-ROM may be attached to the recording medium reading device 106. Then, the CPU 105 may read out the program and execute the program.

Or, such a program may be embedded in a carrier wave that is acceptable by a computer. Then, the carrier wave may be supplied to the computer shown in FIG. 4, so that the computer executes the program.

The method of supplying the program to the computer is arbitrary. For example, the program may be posted on a bulletin board (BBS) of a communication network, and may be distributed to the computer through the network. The above-described functions can be realized by activating this program and executing the program under the control of an OS (operating system) likewise executing other application programs.

Any types of recording medium such as a semiconductor memory (for example, a ROM, a non-volatile memory card, etc.), an optical recording medium (for example, a DVD, an MO, an MD, a CD-R, etc.), and a magnetic recording medium (for example, a magnetic tape, a flexible disk, etc.) can be used as the recording medium.

Further, the OS may perform a part or all of the required operations to realize some functions explained in the above embodiment, based on instructions of the program.

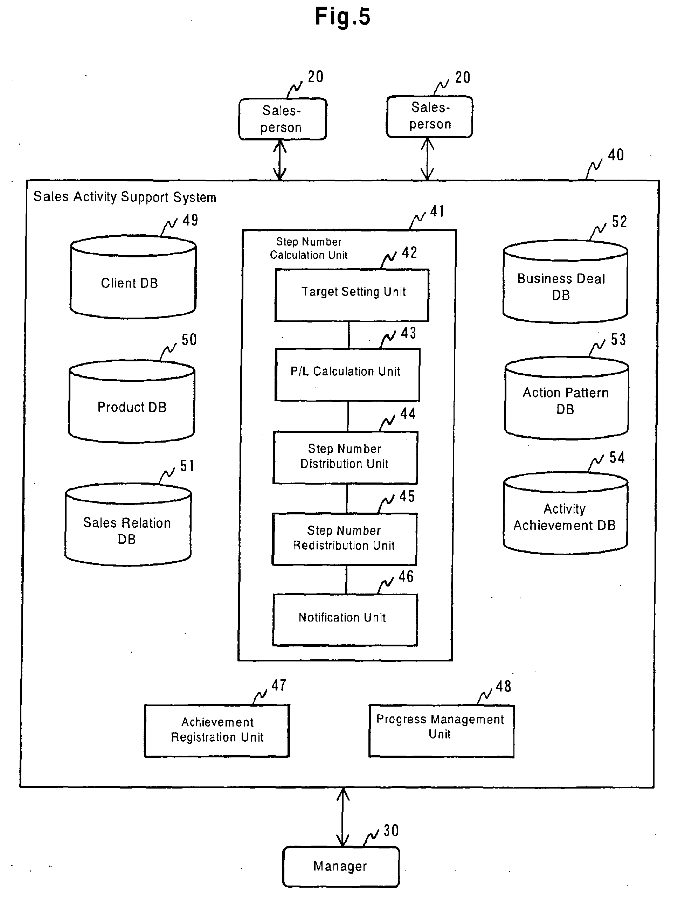

FIG. 5 is a block diagram showing the entire structure of a sales activity support system according to a second embodiment. As illustrated, the sales activity support system 40 comprises a step number calculation unit 41, an achievement registration unit 47, a progress management unit 48, a client DB (database) 49, a product DB 50, a sales relation DB 51, a business deal DB 52, an action pattern DB 53, and an activity achievement DB 54.

The step number calculation unit 41 includes a target setting unit 42, a P/L calculation unit 43, a step number distribution unit 44, a step number redistribution unit 45, and a notification unit 46.

A salesperson and his/her manager gain access to the sale activity support system 40 having this structure, using their own terminals (a salesperson terminal 20 and a manager terminal 30). The salesperson terminal 20 and the manager terminal 30 have the same structures as those of the salesperson terminal 20 and the supervisor terminal 30 in the first embodiment, respectively. Therefore, the same reference numerals are given to the salesperson terminal 20 and the manager terminal 30 of the present embodiment, and explanation therefor will be omitted.

The functions of the sales activity support system 40 may be realized by a single computer, or may be realized by separate computers respectively. The databases 49 to 54 may be structured so that they are accessed through a database server.

In order to simplify the explanation, the sales activity support system 40 will be assumed to be managed by a single server computer (sales activity support server).

An arbitrary communication network may be used as a communication network to connect the server computer, the databases, the salesperson terminal 20, and the manager terminal 30. For example, any of a LAN (Local Area Network), a WAN (Wide Area Network), and the internet utilizing a private line network or a public line network may be used.

A salesperson inputs information on a client and a business deal and other information useful for sales activities which are obtained through business activities of the salesperson by using the salesperson terminal 20, and registers the input information to a later-described database. Besides, the salesperson retrieves information on a client necessary for sales activities, and registers and checks an activity plan and activity achievements of each business deal.

A manager refers to numbers of activity steps assigned to his/her subordinate salespersons to check distribution of activity steps by using the manager terminal 30, and thereby manages progresses made and gives instructions by taking activity achievements into consideration.

The client DB 49 stores as information regarding a client, profiles of the client (name, address, and division and name of a person in charge, etc.), corporate information (corporate scale, potentials, etc.), information on other companies, and a business deal number, etc.

The product DB 50 stores specification information regarding a sales target product and optional products therefor, price information regarding the product price, a price of a maintenance contract, and prices of expendable supplies, and cost information regarding installation costs, delivery costs, maintenance costs, personnel expenses, and overheads.

In addition, the product DB 50 stores classification information as to whether a product needs concentrative sales promotion or not (for example, whether the product will be on a sales campaign or not).

The sales relation DB 51 stores information regarding a duty range, a sales skill maturity level, a contact information (e-mail address, etc.), and later-described activity plan step number and actually performed step number which are calculated or registered by the step number calculation unit 41, separately for each manager and his/her subordinate salespersons in each sales division.

The business deal DB 52 stores information regarding past business deals and business deals in progress, including business deal number, salesperson in charge, maturity level, success possibility of negotiation, product concerned and its specification, gross sales margin, delivery method, agreed matters, agreed amount of payments, and P/L (statement of profits and losses), etc.

Maturity levels are in line with progresses of a negotiation, and are a series of sales activities from preparation of negotiation till reaching an agreement that are arranged in the order of objectives. Specifically, the maturity levels are classified into nine levels, namely, gaining a footing, establishing relationship, researching circumstances, inducing interests, grasping needs, extracting problems, making a proposition, removing purchase restraining factors, and winning an order in the order of lower levels to higher levels.

The action pattern DB 53 cumulates guidelines of sales activities for leading negotiation to success in accordance with maturity levels and product types, which guidelines are based on analysis of actions of high performance salespersons. A guideline includes work objectives to be performed at each maturity level (for example, determination of product specification, creation of a written estimate, presentation, etc.), information necessary for performing the work objectives, methods of performing the work objectives, standard performance time to be spent and standard number of visits to be paid to complete the work objectives.

The activity achievement DB 54 stores business deal number, success possibility of negotiation, maturity level of negotiation progress, date of performance, and comments on work performance.

As described above, the step number calculation unit 41, the achievement registration unit 47, and the progress management unit 48 are constituted by a single server computer. Explanation of a detailed structure of the server computer will be omitted, but the server computer comprises a CPU (Central Processing Unit), a RAM (Random Access Memory) which provides a work area, and a ROM (Read Only Memory) storing programs for realizing functions of the above-described units 41 to 48.

The step number calculation unit 41 calculates an activity plan step number for all salespersons or a designated salesperson at a predetermined timing, stores the calculated step number in the sales relation DB 41, and notifies the step number to the salespersons or their manager by e-mail, etc. For example, when the achievement registration unit 47 registers progresses of daily sales activities which are input by the salesperson terminal 20 in the activity achievement DB 54, the above operation is performed in accordance with an instruction from a manager, or before a sales meeting, or regularly.

The step number calculation unit 41 activates the target setting unit 42, the P/L calculation unit 43, and the step number distribution unit 44 sequentially, and calculates an activity plan step number for each client target. The step number calculation unit 41 determines whether or not the total activity plan step number in a given month exceeds a performable step number (number of days) representing a number of steps which can be performed by a salesperson in the given month, for each salesperson. In a case where determining that the total activity plan step number exceeds the performable step number, the step number calculation unit 41 activates the step number redistribution unit 45 as will be described later, in order to control the step number redistribution unit 45 to redistribute the activity plan step number.

The target setting unit 42 extracts a business deal of each salesperson from the business deal DB 52, and determines the rank (priority) of business deals, based on client information stored in the client DB 49 such as corporate scale, potentials (for example, evaluation by an outside evaluation institution such as NIKKEI ranking), past business deals, reliability, etc., and business deal information stored in the business deal DB 22 such as the scale of business deal, success possibility, recall conditions, maturity level, etc.

For example, business deals regarding hot products expecting sales proceeds of a million yen or more such as "color printer", "color digital multi-function apparatus" "color digital copier", etc, or products on a sales campaign expecting high proceeds will be ranked high.

Business deals regarding accessory products such as "expendable supplies" and "replaceable products" expecting sales proceeds of less than five thousand yen will be ranked low.

The P/L calculation unit 43 generates a P/L (a statement of profits and losses) for each business deal.

To explain this operation specifically, the P/L calculation unit 43 first extracts the specification of a product concerned in a given business deal, the specification of options, maintenance costs, and personnel expenses from the product DB 50. Then, the P/L calculation unit 43 calculates a gross sales margin based on a total discount rate, a discount rate for each option, product type, and whether it is a lease deal (number of years, leasing rate) or a purchase deal. Then, the P/L calculation unit 43 generates a statement of profits and losses by calculating a running cost that is required during the number of years during which the product is operable or during a leasing period with the product type, contract pattern, maintenance contract, deals for expendable supplies and personnel expenses taken into account, and by calculating contribution proceeds or divisional proceeds obtained due to the product throughout the product's life. The contribution proceeds are calculated by subtracting variable costs from the gross sales margin, and the divisional proceeds are calculated by subtracting fixed costs from the contribution proceeds.

The step number distribution unit 44 calculates an activity plan step number for each business deal.

Specifically, the step number distribution unit 44 selects a guideline that is close to each business deal from the action pattern DB 23, and extracts a performance period and a performance time at each maturity level. Then, the step number distribution unit 44 calculates the activity plan step number using the equation indicated below, by distributing the performance time throughout the performance period in accordance with a P/L (for example, divisional proceeds) and the performance ability of a salesperson. However, in a case where the business deal is already in progress, the step number distribution unit 44 calculates an activity plan step number for the present maturity level and thereafter.

$$\text{(activity plan step number)}_i = \text{(performance time)}_i \times \text{(performance ability)} \times \text{(P/L)}/\alpha_i$$

The subscript i represents the maturity level, and $\alpha_i$ represents a profit obtained per unit performance time at the maturity level i.

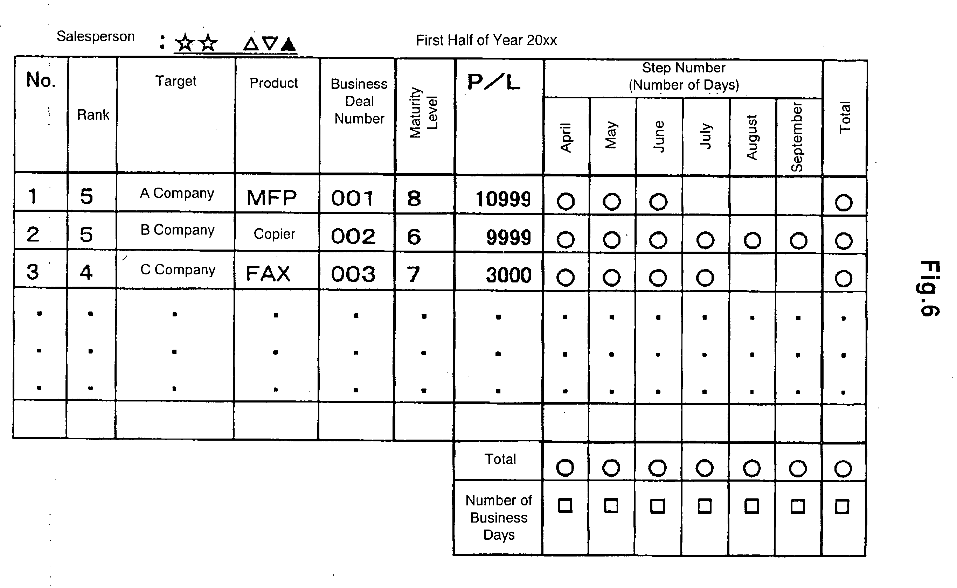

The activity plan step number calculated in this way is formatted as shown in FIG. 6. FIG. 6 is an activity step number table which indicates step numbers calculated for a salesperson for a half-year period. A product name, a business deal number, a maturity level, P/L, and an activity step number (number of days) for each month are arranged in the order of client targets having higher ranks (priority). Planned values calculated by the step number calculation unit 41 and an actual performance value cumulated by the achievement registration unit 47 are indicated as activity step numbers of each month.

The step number redistribution unit 45 performs redistribution of the activity plan step number in a predetermined case. Specifically, in a case where the step number calculation unit 41 determines that the total activity plan step number of a salesperson in each month is equal to or greater than 90 percent of the month's performable step number (number of days), the step number redistribution unit 45 excludes a low-ranked business deal from the salesperson's duty range so that the total activity plan step number will be equal to or less than the performable step number, in order to avoid forcing overwork.

Further, the step number redistribution unit 45 extracts another salesperson suitable for the excluded business deal from the sales relation DB 51, assigns the excluded business deal to the extracted salesperson, and corrects the activity step number table of the extracted salesperson.

In a case where there is no salesperson to whom the excluded business deal should be assigned, the step number redistribution unit 45 repeats redistribution until an optimum distribution is obtained, by changing the exclusion target to a business deal ranked higher than the excluded business deal.

The notification unit 46 stores the activity step number table in the sales relation DB 51 salesperson by salesperson, and notifies the activity step number table to each salesperson and his/her manager by e-mail, etc.

The achievement registration unit 47 stores an activity achievement (progress status) of each business deal at each maturity level which is input by the salesperson terminal 20 to the activity achievement DB 44. The achievement registration unit 47 calculates an actually performed step number based on the input activity achievement. Then, the achievement registration unit 47 updates the actual performance value representing the total number of activity steps spent on each business deal in the activity step number table of the concerned salesperson, and stores the updated table in the sales relation DB 51. The achievement registration unit 47 notifies the activity achievement stored in the activity achievement DB 44 to the manager of the salesperson by e-mail, etc.

The stored information of the activity achievement DB 44 includes a business deal number, a maturity level, a date of activity, and comments on activity situation, etc. when the negotiation is at a low maturity level, and additionally includes success possibility of the negotiation, etc. as the maturity level goes up. Information representing the specification of a concerned product, gross sales margin, and delivery method is stored in the business deal DB 52 business deal by business deal.

In addition, the achievement registration unit 47 stores information on other companies and information on problems of the client which are obtained through sales activities of a salesperson to the client DB 49. If the negotiation ends in success, the achievement registration unit 47 stores the business deal number, etc. of the business deal that attains success to the client DB 49.

When achievement registration is performed by each salesperson and the actual performance value of the activity step number table in the sales relation DB 51 is updated, the progress management unit 48 compares the actually performed step number and the planed step number, and determines whether or not there is difference between them. In a case where determining that the actually performed step number exceeds or does not reach the planed step number and therefore that the progress status is not desirable, the progress management unit 48 notifies the progress status together with information regarding the business deal (business deal number, salesperson's name, etc.) to the manager of the salesperson in charge of the business deal by e-mail, etc.

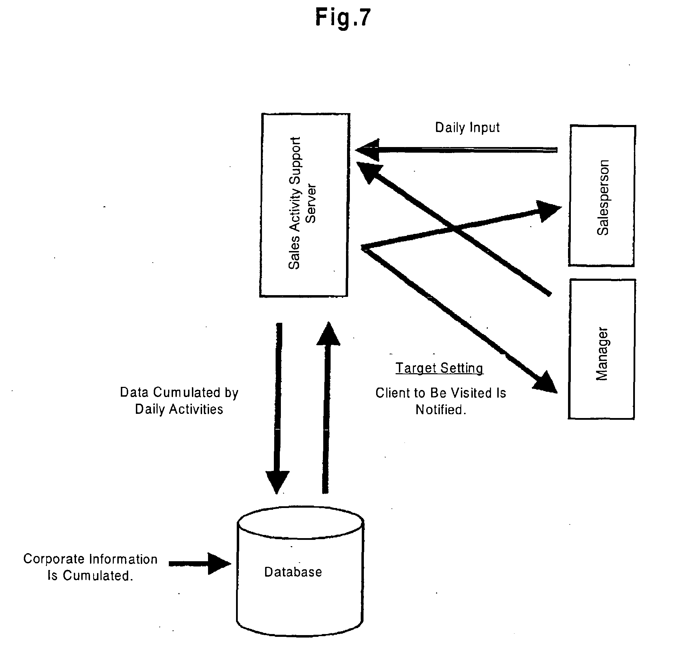

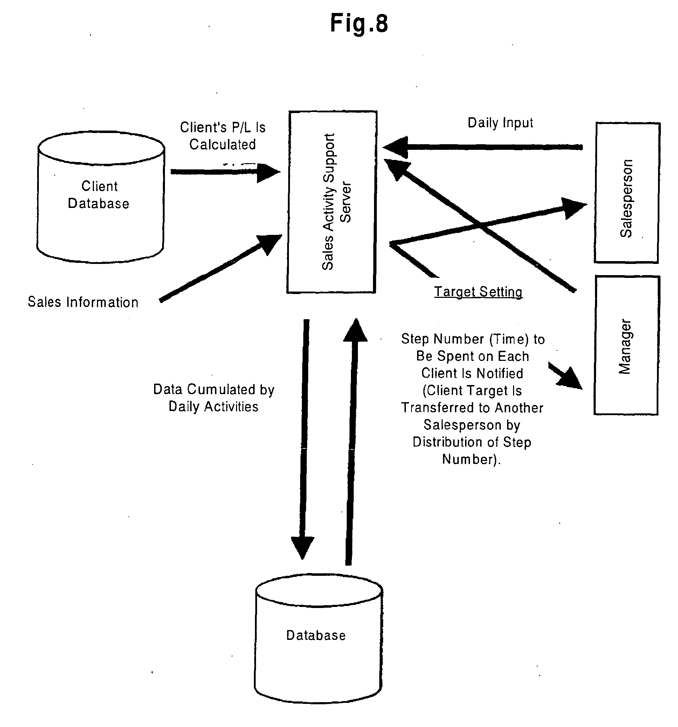

Operations of the respective units of the sales activity support system 40 having the above structure will now be explained with reference to FIG. 7 and FIG. 8. In FIG. 7 and FIG. 8, the client DB 49, the product DB 50, the sales relation DB 51, the business deal DB 52, the action pattern DB 53, and the activity achievement DB 54 are collectively displayed as a database.

When a business deal arises, a salesperson inputs this business deal from the salesperson terminal 20. The sales activity support server registers business deal information regarding the input business deal to the database (business deal DB 52), and notifies to the manager that the business deal is newly registered.

When the process of approaching the client is still at a low maturity level, the salesperson inputs the business deal number, the maturity level, the date of activity, and comments on the activity situations, etc. The achievement registration unit 47 of the sales activity support server registers daily sales activities to the database (activity achievement DB 54) as progress status for each business deal. As the maturity level of the approach to the client advances, success possibility of the negotiation is added to the database.

The achievement registration unit 47 further stores information regarding the specification of a concerned product, gross sales margin, and delivery method to the database (business deal DB 52).

Information regarding other companies and problems of the client obtained through sales activities of the salesperson is stored in the database (client DB 49) by the achievement registration unit 47. Further, in a case where the negotiation ends in success, the business deal number of the business deal achieving success is stored in the database (client DB 49) by the achievement registration unit 47.

Then, when the salesperson inputs progress status (activity achievement) of daily sales activity from the salesperson terminal 20, the achievement registration unit 47 stores the activity achievement in the activity achievement DB 54 by business deal by business deal. The step number calculation unit 11 calculates an activity plan step number for each business deal in response to an input of the activity achievement or an instruction from the manager, or before a sales meeting or regularly. Further, the step number calculation unit generates an activity step number table for each salesperson based on the calculated activity plan step number, registers the generated activity step number table to the database (sales relation DB 51), and notifies the activity step number table to the salesperson and his/her manager.

The activity step number table is generated by the step number calculation unit 11 in accordance with the following procedures.

(1) A business deal of a salesperson is extracted from the business deal DB 52. The rank (priority) of the business deal is determined based on the client information stored in the client DB 49 including information on the corporate scale of the client corresponding to the business deal, potentials, past business deals, and reliability, and the business deal information stored in the business deal DB 52 regarding the scale of negotiation, success possibility, recall conditions, and maturity level.

(2) A statement of profits and losses is generated for each business deal by calculating a running cost required during the number of operable years or during a leasing period with the gross sales profits of the product concerned, contract pattern, maintenance contract, deals for expendable supplies, and personnel expenses taken into consideration, and by calculating contribution proceeds and divisional proceeds obtained until the product's life ends.

(3) A guideline close to the target business deal is selected from the action pattern DB 53. An activity plan step number suitable for P/L and performance ability of a salesperson is calculated for the performance period of each maturity level derived from the selected guideline.

(4) Whether or not the total activity plan step number of a salesperson in a month is equal to or greater than 90 percent of the number of business days in the month is determined. In a case where overwork is caused, a business deal having a low rank is excluded from the duty range of the salesperson. The excluded business deal is assigned to another salesperson suitable for the business deal, and the activity step number table of the salesperson to whom the business deal is assigned is corrected.

The progress management unit 48 determines whether or not there is difference between the activity plan step number and the cumulated actually performed step number. In a case where determining that there is difference between them, the progress management unit 48 notifies the progress status, etc. to the manager by e-mail, etc. The manager gives instructions to the salesperson in accordance with the contents of the e-mail.

As explained above, according to the sales activity support system 40 of the present embodiment, a client target is set in accordance with an importance degree of a business deal, and the activity plan step number for a salesperson is determined based on a statement of profits and losses of each business deal. Therefore, sales force can be focused on an important business deal and efficient sales activities can be performed by the entire sales division.

An excess amount of work that can not be covered by an activity step number of a salesperson who is in charge.of many important business deals can be assigned to another suitable salesperson, so that business chance will not be missed. Therefore, work performance of the entire sales division can be improved.

Further, a client target relating to an important business deal is notified to a salesperson who will be in charge of this business deal and to his/her manager. Therefore, meaningless visits to a client will be cut and management work will be simplified.

The sales activity support system according to the present invention is not limited to the above-described second embodiment. For example, the entire sales activity support system can be constituted by a single computer. Likewise the first embodiment, the sales activity support system according to the second embodiment can be realized by a computer having the hardware structure shown in FIG. 4.

The structure of the computer shown in FIG. 4 is the same as before. Thus, explanation of the structure will be omitted. Note that the storage device 103 and the memory 104 store data and a program necessary for realizing the sales activity support system 40 instead of the sales activity support system 10. The storage device 103 stores data to be stored in the above-described databases 49 to 54. The memory 104 stores a program for realizing the functions of the units 41 to 48 of the sales activity support server.

In the second embodiment, it has been explained that the program for realizing the functions of the units 41 to 48 of the sales activity support server is stored in a ROM not shown. Further, it has been explained that such a program is stored in the memory 104 in the computer shown in FIG. 4. However, for example, such a program may be written in a recording medium such as a CD-ROM in advance, and this CD-ROM may be attached to the recording medium reading device 106. Then, the CPU 105 may read out the program and execute the program.

Or, such a program may be embedded in a carrier wave that is acceptable by a computer. Then, the carrier wave may be supplied to the computer shown in FIG. 4, so that the computer executes the program.

The method of supplying the program to the computer is arbitrary. For example, the program may be posted on a bulletin board (BBS) of a communication network, and may be distributed to the computer through the network. The above-described functions can be realized by activating this program and executing the program under the control of an OS (operating system) likewise executing other application programs.

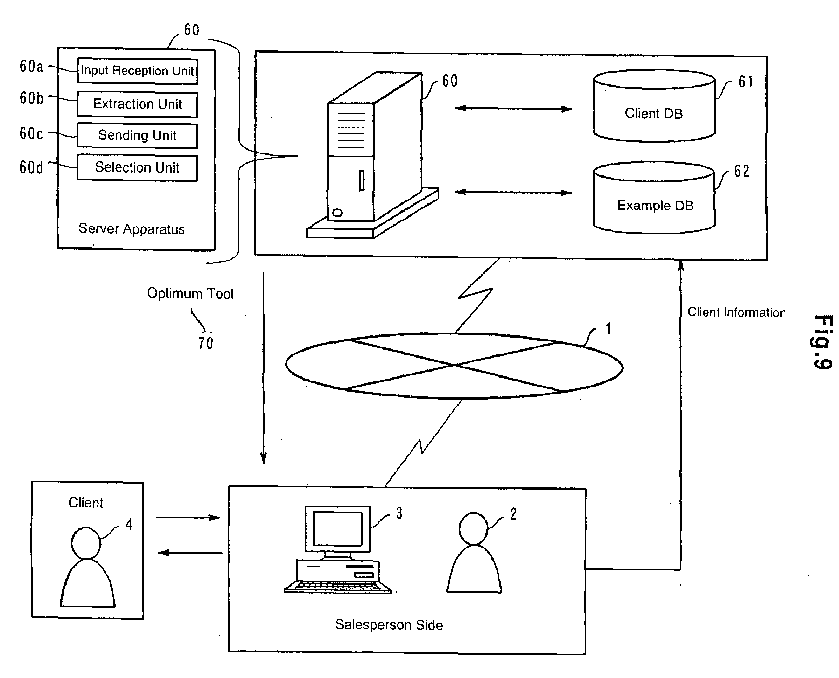

FIG. 9 is a diagram for explaining an example of a structure of a sales activity support information providing system according to one embodiment of the present invention. As illustrated, a terminal apparatus 3 used by a salesperson 2 and a server apparatus 60 for providing sales activity support information are connected through a network 1. The server apparatus 60 is structured so as to be able to access a client DB 61 and an example DB 2. An optimum tool 70 according to the present embodiment represents information made up of various kinds of sales activity support information for supporting sales activities. The optimum tool 70 will be detailed later. The server apparatus 60 comprises an input reception unit 60a, an extraction unit 60b, a sending unit 60c, and a selection unit 60d.

In FIG. 9, only one terminal apparatus 3 is connected to the server apparatus 60, in order to simplify the illustration. However, a plurality of terminal apparatuses 3 may be connected to the server apparatus 60 through the network 1. The network 1 is either the internet connected by a private line and a telephone line, or an intranet employing the internet technique. However, even in a case where a private line is used, the network 1 is not limited to a WAN (Wide Area Network) or a MAN (Metropolitan Area Network), but may be structured by a LAN (Local Area Network) depending on the location where the server apparatus 60 is installed. Further, measures for enhancing the security are taken for the network 1, by using a private line, encrypting data to be transmitted based on an existing art, authenticating the user of each terminal apparatus 3, etc.

In the present embodiment, it is assumed that the client DB 61 and the example DB 62 are installed at the same location as the server apparatus 60. The client DB 61 stores client information including individual information regarding a client. The example DB 62 stores various examples regarding business deals in association with the individual information. The individual information at least includes information on business field, a used machine model (including the number of the machines), scale (for example, the number of employees), and information technology introduction level. The information technology introduction level includes indexes representing the degrees of introduction of information technology such as internet utilization rate and saturation level of phones and personal computers, etc.

The server apparatus 60 may be installed anywhere such as at a seller company side, at the parent company side, and an outside service provider side, etc., as long as the server apparatus 60 is connected to each terminal apparatus 3 through the network 1. Further, according to the present embodiment, the client DB 61 and the example DB 62 may be physically included in the server apparatus 60, or may be physically separated from the server apparatus 60 by being connected to the server apparatus 60 through a predetermined communication line. The server apparatus 60 may be structured as a computer having a hierarchical structure including a server function for connecting to the network 1 and a server function for authenticating each user. In this case, a program for realizing later-described functions of each unit should at least be stored in a ROM of a control unit (not shown). It is preferred that this program comprises a GUI (Graphical User Interface) so that operability will be improved when a user uses each unit's function.

In FIG. 9, the server apparatus 60 is shown as one unit. However, its functions may be dispersed through various kinds of networks as described above. Further, the terminal apparatus 3 is shown as a desk-top personal computer. However, the terminal apparatus 3 may be a cellular phone or a mobile computer connectable to a network.

The input reception unit 60a receives an input of client information necessary for the salesperson 2 to specify a client set as a target, from the terminal apparatus 3.

The extraction unit 60b extracts client's individual information corresponding to the client information received by the input reception unit 60a from the client DB 21, and extracts an example corresponding to the extracted individual information from the example DB 22.

The sending unit 60c structures sales activity support information including the individual information and example extracted by the extraction unit 60b as the optimum tool 70, and sends the optimum tool 70 to the terminal apparatus 3.

The salesperson 2 visits a client 4, and performs sales activities for winning a business deal by using the optimum tool 70 sent from the sending unit 60c. In a case
where the salesperson 2 has to visit a plurality of clients, the salesperson 2 prepares the optimum tool 70 for each client, and performs sales activities.

The salesperson 2 inputs a sales activity result obtained at the visited client's place to the server apparatus 60 from the terminal apparatus 3. The server apparatus 60 registers the sales activity result input from the terminal apparatus 3 to the example DB 22 as an example. The example registered in the example DB 22 is effectively used in the negotiation process for business deals assigned to other salespersons. At this time, examples of success attained in sales activities may be selectively registered.

When the server apparatus 60 receives an input of client information for specifying a target client of the salesperson 2 from the terminal apparatus 3, the server apparatus 60 also receives an input of a scheduled visiting date on which a client corresponding to the input client information will be visited. The server apparatus 60 sends sales activity support information corresponding to the client information to the terminal apparatus 3, on a desired sending date which is arbitrarily set in accordance with an instruction of the salesperson 2 input from the terminal apparatus 3, before the scheduled visiting date. The desired sending date can be arbitrarily set by the salesperson 2. If the salesperson 2 designates the desired sending date on a day before the scheduled visiting date, the optimum tool 70 is sent to the salesperson 2 on the designated date (for example, the day before the scheduled visiting date).

Client-related information regarding interests and concerns of a client may be registered in the example DB 62 in association with the individual information registered in the client DB 61. The server apparatus 60 extracts client-related information of a client corresponding to the client information received by the input reception unit 60a from the example DB 62, and sends the extracted client-related information to the terminal apparatus 3. The client-related information includes "keyword" and "sales talk" suited to the client for attracting interests of the client. The client-related information is pre-classified in accordance with characteristics of each client (for example, business field, information technology introduction level, etc.).

When the server apparatus 60 receives client information for specifying a client by the input reception unit 60a, the server apparatus 60 receives a change of a predetermined condition relating to a business deal of the client specified by the received client information from the terminal apparatus 3. The server apparatus 60 sends the optimum tool 70 that is adjusted to the received change of condition to the terminal apparatus 3. Such a condition is a negotiation condition such as an estimated amount of payment, and date of delivery, etc. necessary for carrying the negotiation. In a case where a negotiation condition for a business deal is changed in the middle of the negotiation for some reason such as emergence of a competing company, the salesperson 2 inputs the changed condition from the terminal apparatus 3. The server apparatus 60 sends the optimum tool 70 adjusted to the changed condition to the terminal apparatus 3.

The selection unit 60d selects an optimum sales means based on the client information for specifying a client which is received by the input reception unit 60a, and provides various materials to the client by using the selected sales means. The selection of a sales means is performed based on the business field of the client, number of employees at the client's office, the importance degree of the business deal, etc. Sales means refer to various sales channels through which the product concerned should be provided to the client. Sales means include door-to-door sales, Web (Internet), telephone, facsimile, and combination of those.

When the server apparatus 60 provides some materials to the client using sales means other than door-to-door sales, the server apparatus 60 determines whether or not to classify the client's business deal as a business deal for which negotiation should be conducted, based on a reply from the client to the materials provided to the client. In a case where determining that the client's business deal is a business deal for which negotiation should be conducted, the server apparatus 60 notifies this determination to the terminal apparatus 3.

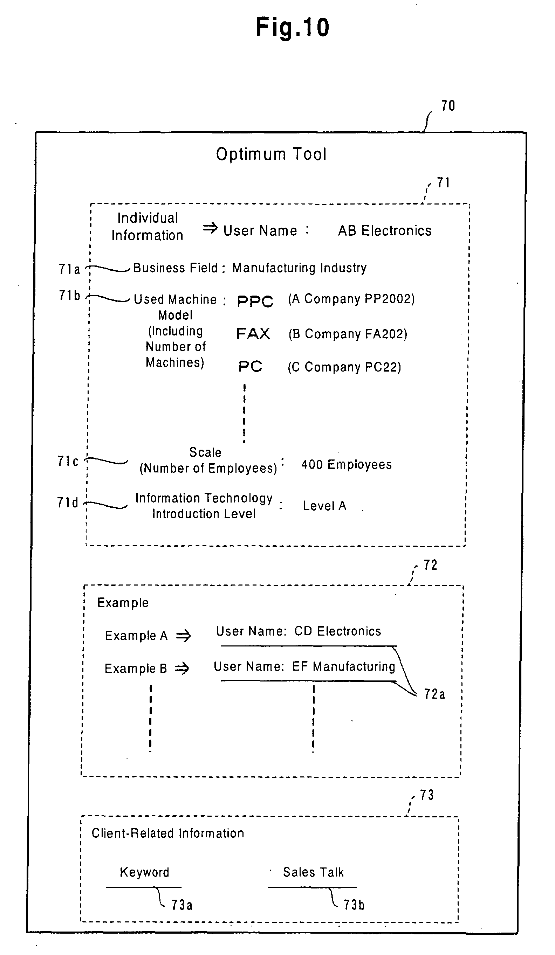

FIG. 10 is a diagram showing one example of the optimum tool 70. The optimum tool 70 includes individual information 71, an example 72, and a client-related information 73. The individual information 71 is made up of a business field 71a, a used machine model (including number of the machines) 71b, a scale (number of employees) 71c, and information technology introduction level 71d. The example 72 is made up of a link 72a to a similar example. The client-related information 73 is made up of a link 73a to a keyword collection, and a link 73b to a sales talk collection. In a case where the salesperson 2 inputs "AB Electrics" as client information for specifying a client, the server apparatus 60 extracts individual information 71 regarding "AB Electrics" from the client DB 61, and extracts an example 72 having a similar condition to the individual information 71 from the example DB 62. The server apparatus 60 further extracts client-related information 73 corresponding to the client from the example DB 62. The server apparatus 60 generates the optimum tool 70 based on sales activity support information including the individual information 71, the example, 72, and the client-related information 73, and provides the generated optimum tool 70 to the salesperson 2.

The salesperson can know the details of the clients by the individual information 71, and can refer to a success example having a similar condition by clicking the link 72a in the example 72. Further, the salesperson 2 can refer to the keyword collection and sales talk collection suitable for the client by clicking the link 73a and the link 73b in the client-related information 73. The salesperson 2 can efficiently perform sales activities to win a new business deal by combining the provided information items organically.

In the present embodiment, it has been explained that although the server apparatus 60 is shown as a single apparatus in FIG. 9, its functions may be dispersed through a predetermined network. A modification where the server apparatus 60 is constituted by two servers having different functions will now be explained.

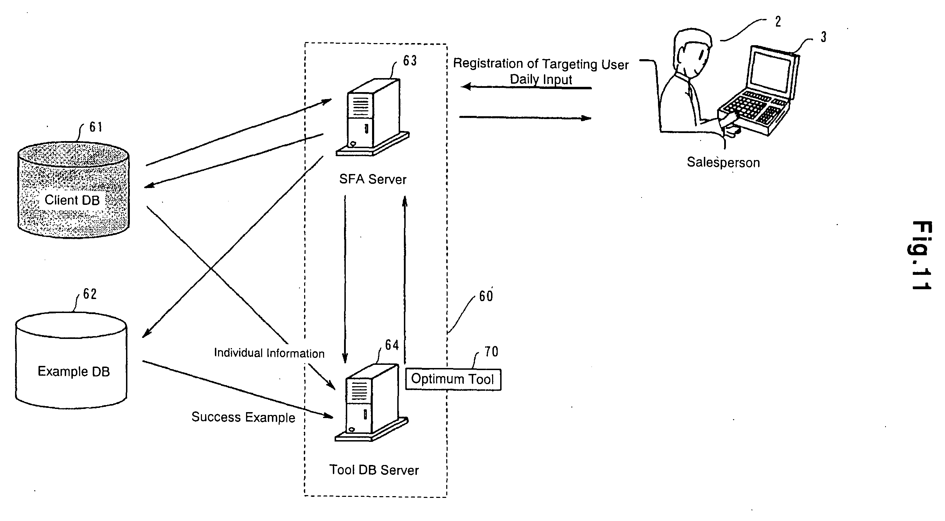

As shown in FIG. 11, the server apparatus 60 is constituted by an SFA (Sales Force Automation) server 63 and a tool DB (database) server 63.

To be more specific, the server apparatus 60 shown in FIG. 11 is constituted by the tool DB server 64 having a function, among the functions of the server apparatus 60 shown in FIG. 9, for generating the optimum tool 70 based on sales activity support information including individual information and an example extracted by the extraction unit 60b, and by the SFA server 63 having functions other than the generating function. However, the functions of the selection unit 60d is not included in these two servers.

The operations of the SFA server 63 and the tool DB server 64 will be explained later.

Next, a sales activity support information providing operation by the sales activity support information providing system including the server apparatus 60 shown in FIG. 11 will be explained.

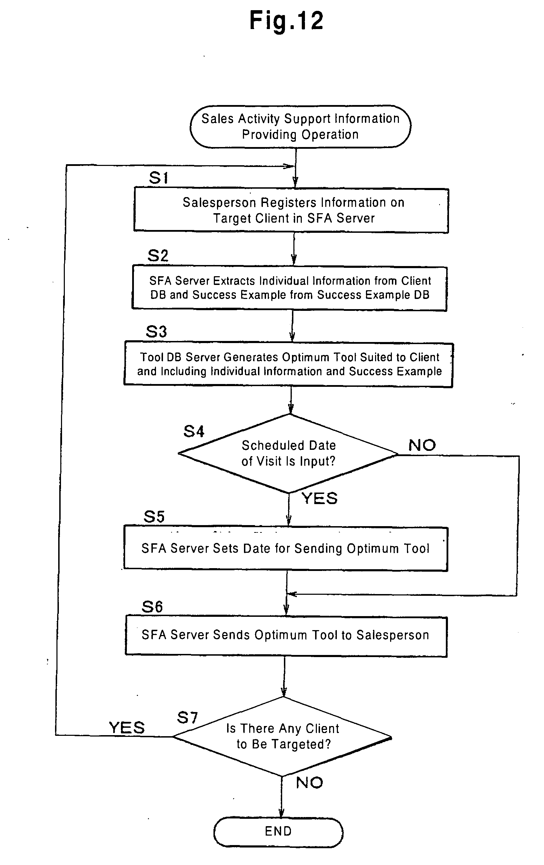

FIG. 12 is a flowchart for explaining the flow of the operation by the sales activity support information providing system.

First, the salesperson 2 inputs client information regarding a client and sales activity information from the terminal apparatus 3, and registers the client as a targeting user in the SFA server 63 (step S1). The SFA server 63 extracts individual information from the client DB 61, and a success example from the example DB 62 based on the registered client information (step S2). This extraction process may be performed by the tool DB server 64. Then, the tool DB server 64 acquires the individual information and success example extracted by the SFA server 63, and generates the optimum tool 70 which is made up of sales activity support information including the acquired individual information and success example (step S3). Here, the SFA server 63 determines whether or not a scheduled visiting date is input together with the client information (step S4). In a case where determining that a scheduled visiting date is input together (step S4: YES), the SFA server 63 sets a date on which the optimum tool 70 will be sent (step S5). Then, the SFA server 63 sends the optimum tool 70 to the terminal apparatus 3 of the salesperson 2 on the set sending date (step S6). In a case where determining in step S1 that a scheduled visiting date is not input together (step S4: NO), the SFA server 63 goes to step S6 and sends the optimum tool 70 to the terminal apparatus 3 of the salesperson 2.

In step S7, the SFA server 63 determines whether or not there is any client to be targeted (step S7). In a case where determining that there is a client to be targeted (step S7: YES), the SFA server 63 returns to the step S1 and repeats the operation. In a case where determining that there is no client to be targeted (step S7: NO), the SFA server 63 ends the sales activity support information providing operation.

The salesperson 2 provided with the optimum tool 70 by the above-described sales activity support information providing method, visits the client registered as the targeting user and performs sales activities to win a new business deal by using the provided optimum tool 70.

At the time of performing the sales activity support information providing operation, the server apparatus 60 may select a sales channel appropriate for each client, and may provide various kinds of information to the client 4 or a call center 5 through the selected sales channel. If the call center 5 is used, the call center 5 sends the provided information to the client 4.

As described above, according to the sales activity support information providing system of the above-described third embodiment and the modification, an optimum tool including individual information corresponding to the client and an example is provided to the salesperson 2. Therefore, the salesperson 2 can carry the negotiation effectively by using the optimum tool which can attract attention of the client. Accordingly, efficiency of the sales activities of the salesperson 2 can be improved.

The sales activity support information providing system of the present invention is not limited to the above-descried third embodiment and modification. For example, the sales activity support information providing system can be structured as another modification example wherein the function of the selection unit 60d of the server 60 explained in FIG. 9 is included.

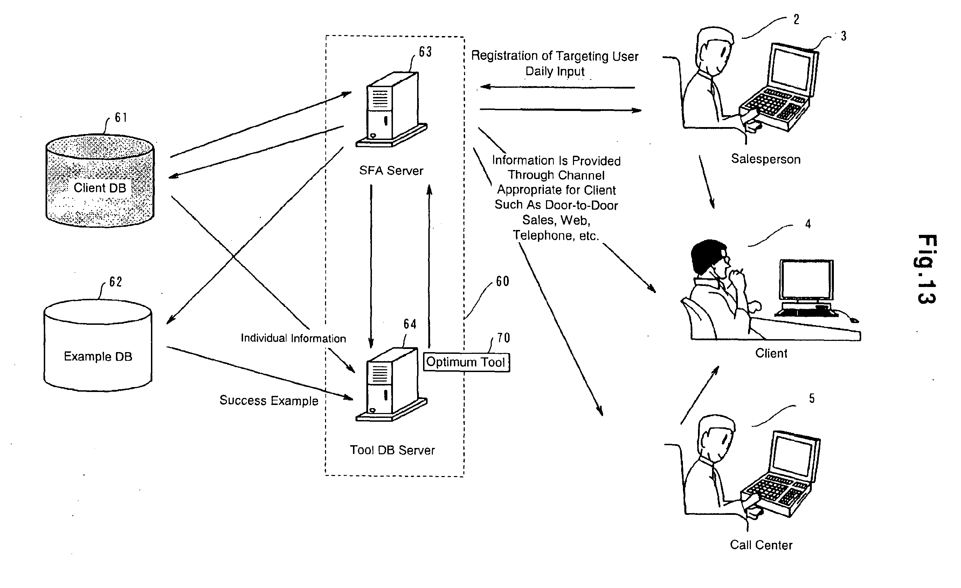

FIG. 13 is a diagram for explaining another modification of the sales activity support information providing system to which the present invention is applied. As shown in FIG. 13, a server apparatus 60 comprises an SFA server 63 and a tool DB server 64. The difference between the server apparatus 60 of FIG. 13 and the server apparatus 60 of FIG. 11 is that in .FIG. 13, a sales channel appropriate for each client is selected by the server 60.

The operations of the SFA server 63 and tool DB server 64 constituting the server apparatus 60, and the operation of the server apparatus 60 itself will now be explained.

First, the salesperson 2 inputs client information regarding a client and sales activity information from the terminal apparatus 3, and registers the client as a targeting user in the SFA server 63. The SFA server 63 extracts individual information from the client DB 61 and a success example from the example DB 62 based on the registered client information (this extraction process may be performed by the tool DB server 64). The tool DB server 64 acquires the individual information and success example extracted by the SFA server 63, and generates the optimum tool 70 including the acquired individual information and success example. The tool DB server 64 sends the generated optimum tool 70 to the SFA server 63. The SFA server 63 sends the optimum tool 70 to the salesperson 2. The salesperson 2 performs sales activities to win a new business deal by using the optimum tool 70. The server apparatus 60 selects a sales channel appropriate for each client, and provides the information to the client 4 or the call center 5 by using the selected sales channel. In a case where the call center 5 is used, the call center 5 sends the information to the client 4.

In a case where the server apparatus 60 determines that sales channels other than door-to-door sales such as Web and telephone is appropriate as the sales channel, the server apparatus 60 provides information to the client 4 through the sales channel determined as appropriate. The server apparatus 60 determines whether or not to classify the client's business deal as a business deal for which negotiation should be conducted, based on a reply from the client. In a case where determining that the client's business deal is a business deal for which negotiation should be conducted, the server apparatus 60 may send this determination to the terminal 3 of the salesperson 2.

According to the above-describe third embodiment, it has been explained that the program for realizing the functions of the sales activity support information providing system is stored in a ROM of a control unit (not shown) of the server apparatus 60. However, a method of providing the program to the server apparatus 60 is arbitrary. For example, a recording medium such as a CD-ROM, a magneto-optical disk, a DVD-ROM, an FD, a flash memory, a memory card, a memory stick, etc. in which the program is stored may be used. A recording medium reading device to which a predetermined recording medium is attached may be connected to the server apparatus 60. Then, a control unit of the server apparatus 60 may read out the program stored in the recording medium, and execute the program.

Or, the program may be embedded in a carrier wave that is acceptable by a computer. Then, the carrier wave may be supplied to the server apparatus 60, so that the server apparatus 60 executes the program.

The functions of the server apparatus 60 in the sales activity support information providing system according to the present embodiment have been mainly explained. However, the present invention can be embodied as a sales activity support information providing method as described above. Further, the present invention can be embodied as a program for controlling a computer to function as the sales activity support information providing system just as the sales activity support information providing system having the above-described functions, and can be embodied as a computer-readable recording medium storing the program.

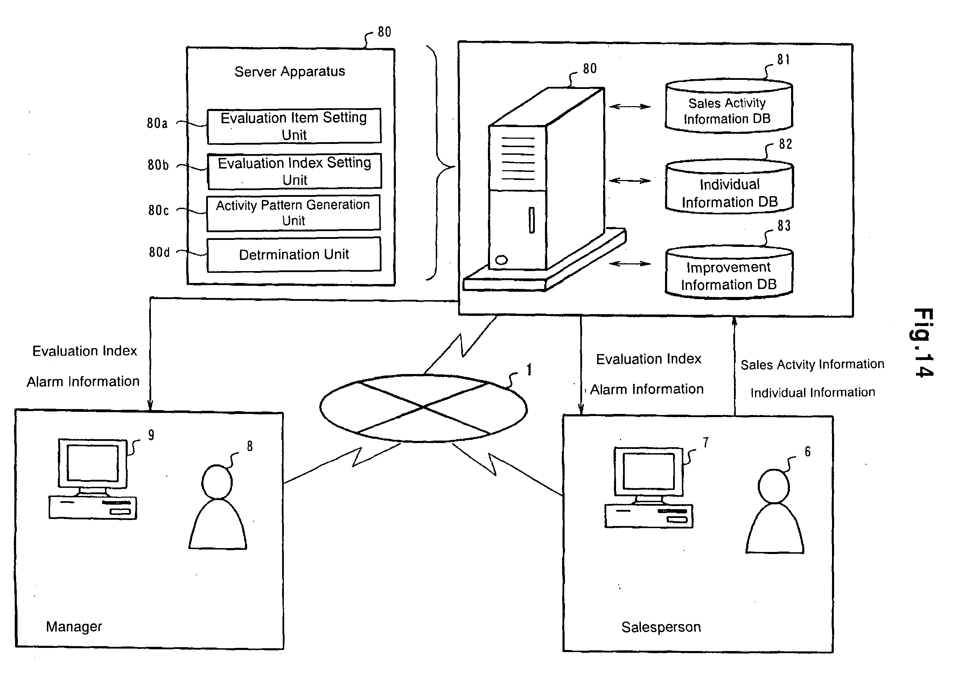

FIG. 14 is a diagram for explaining an example of a structure of a sales activity evaluation system according to one embodiment of the present invention. As shown in FIG. 14, a terminal apparatus 7 used by a salesperson 6, a terminal apparatus 9 used by a manager 8, and a server apparatus 80 for evaluating sales activities are connected through a network 1. The server apparatus 80 is structured so as to be able to access a sales activity information DB 81, an individual information DB 82, and an improvement information DB 83. The server apparatus 80 comprises an evaluation item setting unit 80a, an evaluation index setting unit 80b, an activity pattern generation unit 80c, and a determination unit 80d.

The network 1 is either the internet connected by a private line and a telephone line, or an intranet employing the internet technique. However, even in a case where a private line is used, the network 1 is not limited to a WAN (Wide Area Network) or a MAN (Metropolitan Area Network), but may be structured by a LAN (Local Area Network) depending on the location where the server apparatus 80 is installed. Further, measures for enhancing the security are taken for the network 1, by using a private line, encrypting data to be transmitted based on an existing art, authenticating the user of each terminal apparatus 3, etc.

According to the present embodiment, the sales activity information DB 81, the individual information DB 82, and the improvement information DB 83 are assumed to be installed at the same location as the server apparatus 80. The sales activity information DB 81 stores sales activity information including achievement data relating to a business deal and a sales activity, salesperson by salesperson. The individual information DB 82 stores individual information relating to sales activities of each salesperson. Individual information relating to sales activities is information relevant to each salesperson, including the skill level of the salesperson, situations of a district covered by the salesperson, etc. Specifically, individual information relating to sales activities includes responsibility level such as section chief, manager, unexperienced newcomer, etc., and movement of a competing company and number of potential clients in the assigned district, etc. The improvement information DB 83 stores improvement information representing a measure for improving a sales activity corresponding to an activity pattern generated by the activity pattern generation unit 80c, which will be explained later.

The server apparatus 80 can be installed anywhere such as at the seller company side, at the parent company side, and an outside service provider side, etc., as long as the server apparatus 80 is connected to each terminal apparatus through the network 1. In the present embodiment, the sales activity information DB 81, the individual information DB 82, and the improvement information DB 83 are connected to the server 80 through a predetermined communication line, and are physically separated from the server 80. However, the configuration of the DBs 81 to 83 is not limited to this, but may be physically included in the server apparatus 80. The server apparatus 80 may be structured as a computer having a hierarchical structure including a server function for connecting to the network 1, and a server function for authenticating each user. In this case, a program for performing the functions of each unit to be described later should at least be stored in a ROM, etc. in a control unit (not shown). It is preferred that this program comprises a GUI (Graphical User Interface) so that operability will be improved when a user uses functions of each unit.

In FIG. 14, the server apparatus 80 is shown as a single apparatus. However, the functions of the server apparatus 80 may be dispersed through various networks as described above. Further, each terminal apparatus is shown as a desk-top personal computer. However, each terminal apparatus may be a cellular phone or a mobile computer connectable to a network.

The evaluation item setting unit 80a sets an evaluation item relating to a business deal and/or a sales activity, salesperson by salesperson (the evaluation items will be specifically described later).

The evaluation index setting unit 80b sets salesperson by salesperson, a KPI (Key Performance Indicator) for the evaluation item set by the evaluation item setting unit 80a, as an evaluation index representing an evaluation result, based on the achievement data stored in the sales activity information DB 81.

The evaluation index setting unit 80b sets an evaluation index for the evaluation item relating to a business deal that is set by the evaluation item setting unit 80a, based on the achievement data corresponding to a business deal stored in the sales activity information DB 81. As achievement data relating to a sales activity is cumulated in the sales activity information DB 81 due to daily inputs of a salesperson, the evaluation index setting unit 80b sets an evaluation index for the evaluation item relating to a sales activity that is set by the evaluation item setting unit 80a, based on the achievement data relating to a sales activity cumulated in the sales activity information DB 81.

An achievement evaluation method utilizing KPI will now be briefly explained. KPI is an evaluation index for quantitatively measuring an achievement rate to which a corporate objective or business strategy is achieved. In a management strategy using KPI, an "objective" is set first, and then an "evaluation index" (KPI) for measuring whether a "measure" for realizing the objective has been actually performed, is set. The "evaluation index" is an index calculated based on a predetermined calculation method. A company sets a KPI an objective value, and monitors values actually achieved for the objective value. If the objective value is not achieved, the company takes a corrective measure in order to attain the corporate objective and business strategy. The KPI method has conventionally been used in business operation management and organizational management, etc.

The evaluation index setting unit 80b sets an evaluation index for an evaluation item set by the evaluation item setting unit 80a, based on achievement data relating to a business deal and a sales activity stored i the sales activity information DB 81 and individual information stored in the individual information DB 82.

The activity pattern generation unit 80c extracts achievement data corresponding to an evaluation item set by the evaluation item setting unit 80a from among achievement data relating to sales activities input by the salesperson 6. Then, the activity pattern generation unit 80c generates an activity pattern of the salesperson 6 based on the extracted achievement data.

The server apparatus 80 classifies the generated activity pattern based on a result (for example, success or failure in gaining an order) of a sales activity corresponding to the generated activity pattern, and stores the classified activity pattern in the sales activity information DB 81 salesperson by salesperson. At this time, the server apparatus 80 extracts an activity pattern corresponding to a successful sales activity from activity patterns stored in the sales activity information DB 81, and the evaluation index setting unit 80b sets an evaluation index for an evaluation item included in the extracted activity pattern.

The evaluation index setting unit 80b may set an evaluation index for an activity pattern not only in case of success in gaining an order, but also in various cases appearing in sales activities such as in case of failure in gaining an order.

The determination unit 80d determines whether or not the activity pattern generated by the activity pattern generation unit 80c needs to be corrected, by using an evaluation index set for an evaluation item included in the activity pattern. Specifically, the determination unit 80d determines whether the activity pattern is good or bad, by, for example, setting a threshold value for the evaluation index.

In a case where the determination unit 80d determines that the activity pattern needs to be corrected, the server apparatus 80 sends alarm information for prompting the activity pattern of a salesperson to be corrected, to the terminal apparatus 7 of the salesperson 6 and to the terminal apparatus 9 of the manager 8. Or, the server apparatus 80 extracts from the improvement information DB 83, improvement information representing a measure for improving the sales activity corresponding to the activity pattern determined as needing correction by the determination unit 80d, and sends the extracted improvement information to the terminal apparatus 7 or 9.

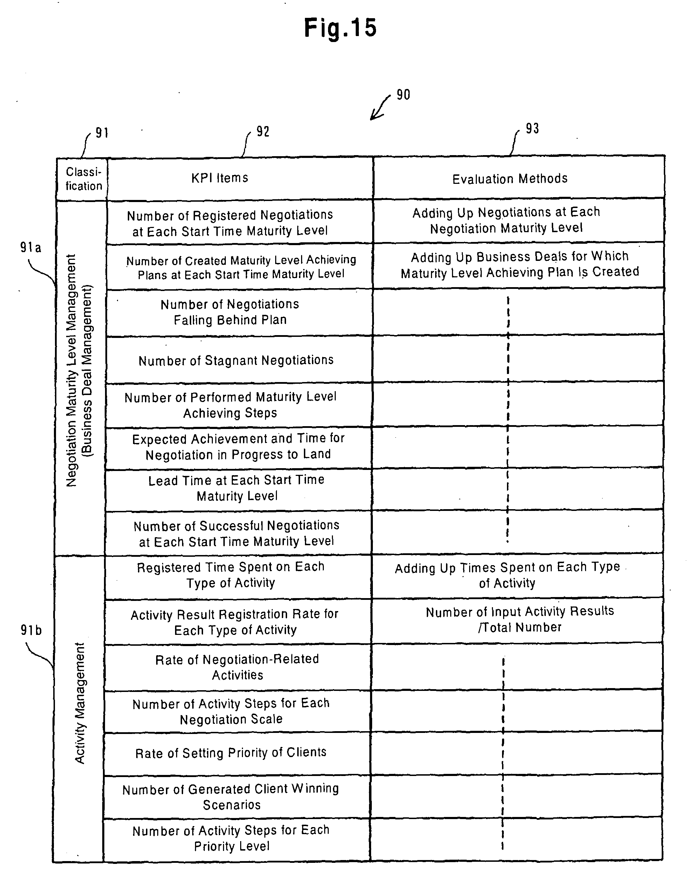

FIG. 15 is a diagram showing an example of evaluation items (KPI items) and evaluation methods. As shown in FIG. 15, a KPI item list 90 comprises classification 91, KPI items 92, and evaluation methods 93. The KPI item list 90 is pre-stored in a storage unit (not shown) included in the server apparatus 80. A human resources manager (not shown) or the manager 8 can refer to the KPI item list 90 by the terminal apparatus 9. The manager 8 inputs an instruction for selecting an arbitrary KPI item for each salesperson from the KPI items 92, from the terminal apparatus 9. In response to the input, the server apparatus 80 sets the selected KPI item for the targeted salesperson. Further, the server apparatus 80 executes an evaluation method corresponding to the selected KPI and sets an evaluation index (KPI), based on achievement data input by the salesperson for whom the selected KPI is set.

The classification 91 roughly includes negotiation maturity level management (business deal management) 91a and activity management 91b. The negotiation maturity level management 91a includes as the KPI items 92, number of registered negotiations at each start time maturity level, number of created maturity level achieving plans at each start time maturity level, number of negotiations falling behind plan, number of stagnant negotiations, number of performed maturity level achieving steps, expected achievement and time for negotiation in progress to land, lead time at each start time maturity level, and number of successful negotiations at each start time maturity level. The activity management 91b includes as the KPI items 92, registered time spent on each type of activity, activity result registration rate for each type of activity, rate of negotiation-related activities, number of activity steps for each negotiation scale, rate of setting priority of clients, number of generated client winning scenarios, and number of activity steps for each priority level. An evaluation method 93 is set for each KPI item 92.

In FIG. 15, if "number of registered negotiations for each start time maturity level" is selected as a KPI item 92 of the negotiation maturity level management 91a, "adding up negotiations at each negotiation maturity level" is executed as an evaluation method 93 in order to set a KPI. In a case where "registered time spent on each type of activity" is selected as a KPI item 92 of the activity management 91b, "adding up times spent on each type of activity (activity types are, for example, negotiation, client-related activity except negotiation, activity irrelevant to client, leave, travels, etc.)" is executed as an evaluation method 93 in order to set a KPI. This operation of setting a KPI is performed by the server apparatus 80 based on a calculation method for each KPI items. Specifically, the server apparatus 80 stores an operation sequence or a program for executing each calculation method in a ROM of a control unit (not shown), and performs the operation by the CPU (Central Processing Unit) in the control unit. Data necessary for the operation is extracted by the control unit of the server apparatus 80 from the sales activity information stored in the sales activity information DB 81.

According to the present embodiment, it has been explained that although the server apparatus 80 is shown as a single apparatus in FIG. 14, its functions may be dispersed through a predetermined network. Now, a modification where the server apparatus 80 is constituted by two servers having different functions, will be explained.

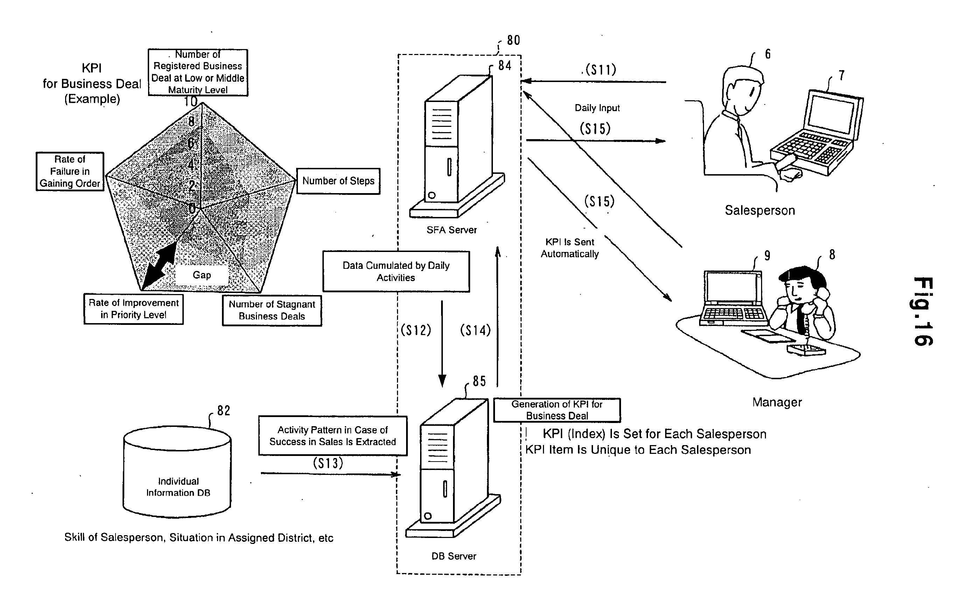

As shown in FIG. 16, the server apparatus 80 is constituted by an SFA (Sales Force Automation) server 84, and a DB (database) server 85.

To be more specific, the server apparatus 80 shown in FIG. 16 is constituted by the SFA server 84 having functions, among the functions of the server apparatus 80 shown in FIG. 14, for communicating with the terminal apparatuses 7 and 9 and accessing the sales activity information DB 81, and by the DB server 85 having server functions other than the above. Though not illustrated, the sales activity information DB 81 is structured so as to be able to access the SFA server 84, and the individual information DB 82 and the improvement information DB 83 are structured so as to be able to access the DB server 85. Note that the function of the evaluation index setting unit 80b for setting an evaluation index for an evaluation item relating to a sales activity set by the evaluation item setting unit 80a is not included in the DB server 85.

Next, the operations of the SFA server 84 and the DB server 85 will be explained along with the flow of the operation performed by the sales activity evaluation system including the server apparatus 80 shown in FIG. 16.

The salesperson 6 inputs sales activity information including achievement data relating to a business deal and a sales activity from the terminal apparatus 7 (step S11). The SFA server 84 stores the sales activity information input from the terminal apparatus 7 in the sales activity information DB (not shown), and sends the sales activity information to the DB server 85 (step S12). The DB server 85 acquires individual information regarding a salesperson corresponding to the sales activity information received from the SFA server 84 from the individual information DB (not shown) (step S13). The DB server 85 sets evaluation indexes (KPI) unique to each salesperson for evaluation items relating to each salesperson's business deal, based on the acquired individual information and the received sales activity information. The evaluation items relating to each salesperson's business deal are, for example, number of registered business deals at low or middle maturity level, rate of failure in gaining an order, rate of improvement in priority level, number of stagnant business deals, and a number of steps (number of maturity level achieving steps actually performed). Maturity levels are levels set in accordance with progresses to be made in a negotiation. Progress status of a negotiation is managed by classifying various situations in the negotiation into nine levels, namely, gaining a footing, establishing relationship, researching circumstances, inducing interests, grasping needs, extracting problems, making a proposal, removing purchase restraining factors, and winning an order. By setting a maturity level in accordance with a progress status of a negotiation for each salesperson, the manager can objectively understand the progress status of the negotiation.

The DB server 85 sends the evaluation indexes set for the above-described evaluation items to the SFA server 84 (step S14). The SFA server 84 sends the evaluation indexes sent from the DB server 85 to the salesperson 6 and the manager 8 (step S15).

As described above, according to the sales activity evaluation system of the fourth embodiment and its modification, quantitative evaluation indexes set based on each salesperson's activity achievement and individual information are provided to the salesperson and his/her manager. Therefore, the salesperson can improve the efficiency of his/her own sales activities. Further, since the manager can give appropriate advice based on the evaluation indexes for each salesperson, the efficiency of the sales activities of the entire sales division can be improved.

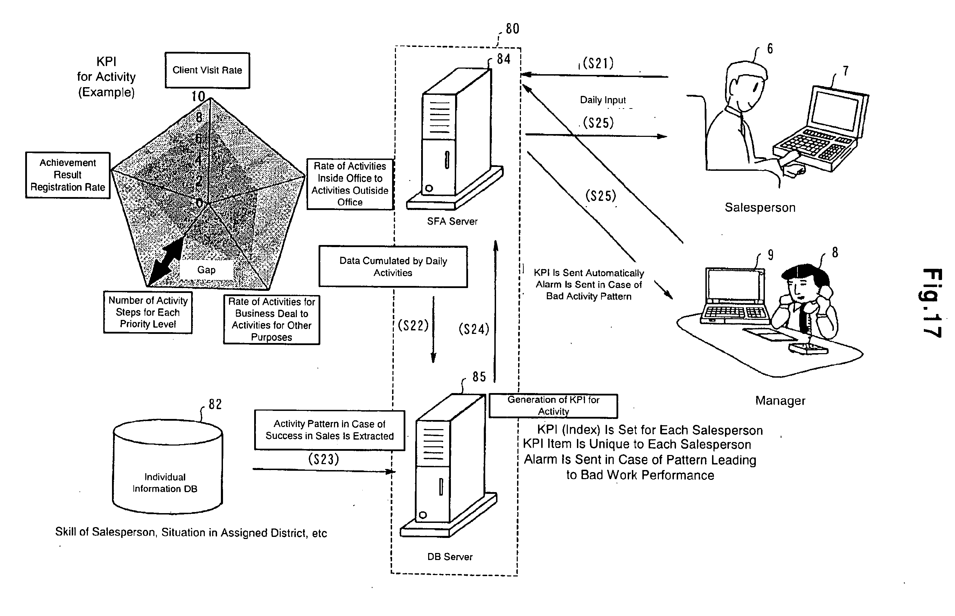

The sales activity evaluation system of the present invention is not limited to the above-described fourth embodiment and its modification. For example, as shown in FIG. 17, the sales activity evaluation system can be structured as another modification wherein the function of the server apparatus 80 explained in FIG. 14 for setting evaluation indexes for evaluation items relating to sales activities is added to the server apparatus shown in FIG. 16.

FIG. 17 is a diagram for explaining another modification of the sales activity evaluation system to which the present invention is applied. As shown in FIG. 17, the server apparatus 80 is constituted by an SFA server 84 and a DB server 85. The difference between the server apparatus 80 of FIG. 17 and the server apparatus 80 of FIG. 16 is that in the server apparatus 80 shown in FIG. 17, evaluation indexes are set for 5 evaluation items relating to sales activities based on sales activity information input by the salesperson 6.

The operations of the SFA server 84 and the DB server 85 constituting the server apparatus 80 will now be explained.

The salesperson 6 inputs sales activity information including achievement data ) relating to a business deal and a sales activity from the terminal apparatus 7 (step S21). The SFA server 84 stores the sales activity information input from the terminal apparatus 7 to the sales activity information DB (not shown), and sends the sales activity information to the DB server 85 (step S22). The DB server 85 acquires individual information regarding a salesperson corresponding to the sales activity information received from the SFA server 84 from the individual information DB (not shown) (step S23). Then, the DB server 85 sets evaluation indexes (KPI) unique to each salesperson for evaluation items relating to sales activities based on the acquired individual information and the received sales activity information. The evaluation items relating to sales activities are, for example, client visiting rate, achievement result registration rate, number of activity steps for each priority level, rate of activities for business deal to activities for other purposes, and rate of activities inside office to activities outside office.

The DB server 85 sends the evaluation indexes set for various evaluation items to the SFA server 84 (step S24). The SFA server 84 sends the evaluation indexes sent from the DB server 85 to the terminal apparatus 7 of the salesperson 6 or to the terminal apparatus 9 of the manager 8 (step S25).

As described above, the DB server 85 sets evaluation indexes for evaluation items relating to sales activities for each salesperson. At this time, the DB server 85 may determine whether or not the activity pattern of each salesperson needs to be corrected based on the set evaluation indexes. In a case where determining that the activity pattern needs to be corrected, the DB server 85 sends alarm information for prompting the activity pattern of the salesperson to be corrected, together with the evaluation indexes, to the SFA server 84 (step S24). The SFA server 84 may send the alarm information sent from the DB server 85 to the terminal apparatus 7 or 9 together with the evaluation indexes (step S25).

According to the above-describe fourth embodiment, it has been explained that the program for realizing the functions of the sales activity evaluation system is stored in a ROM of a control unit (not shown) of the server apparatus 80. However, a method of providing the program to the server apparatus 80 is arbitrary. For example, a recording medium such as a CD-ROM, a magneto-optical disk, a DVD-ROM, an FD, a flash memory, a memory card, a memory stick, etc. in which the program is stored may be used. A recording medium reading device to which a predetermined recording medium is attached may be connected to the server apparatus 80. Then, a control unit of the server apparatus 80 may read out the program stored in the recording medium, and execute the program.

Or, the program may be embedded in a carrier wave that is acceptable by a ) computer. Then, the carrier wave may be supplied to the server apparatus 80, so that the server apparatus 80 executes the program.

The functions of the server apparatus 80 in the sales activity evaluation system according to the present embodiment have been mainly explained. However, the present invention can be embodied as a sales activity evaluation method as described above. Further, the present invention can be embodied as a program for controlling a computer to function as the sales activity evaluation system just as the sales activity evaluation system having the above-described functions, and can be embodied as a computer-readable recording medium storing the program.

Evaluation items which can be used in the present invention are not limited to the evaluation items (KPI items) explained in the above-described embodiment, but any evaluation items can be used as long as such evaluation items are appropriate for evaluating business deals and sales activities comprehensively and objectively. In the above-described embodiment, it has been explained that KPI is used as an evaluation index. However, evaluation indexes which can be used in the present invention are not limited to KPI, but any evaluation indexes can be used as long as such evaluation indexes indicate quantitative evaluation results for evaluation items. Calculation methods for such evaluation indexes are arbitrary.

As explained so far, according to the present invention, it is possible to provide a sales activity support system, a sales activity support information providing system, a sales activity evaluation system, a recording medium, and a program for realizing efficient sales activities.

Various embodiments and changes may be made thereunto without departing from the broad spirit and scope of the invention. The above-described embodiments are intended to illustrate the present invention, not to limit the scope of the present invention. The scope of the present invention is shown by the attached claims rather than the embodiments. Various modifications made within the meaning of an equivalent of the claims of the invention and within the claims are to be regarded to be in the scope of the present invention.

**Claims**

1. A sales activity support system **characterized by** comprising:

   a client information storage unit (14) which stores client information and business deal information on a business deal of the client;
   an action pattern storage unit (15) which stores an action pattern made up of a work objective and a performance time which are obtained by analyzing a sales activity of a high performance salesperson;
   a contact information storage unit (18) which stores contact information of concerned people who are to support a sales activity; and
   an activity plan creation unit (11) which creates an activity plan for each business deal based on an action pattern selected from said action pattern storage unit (15) in accordance with the business deal information stored in said client information storage unit (14), and notifies the created activity plan to the concerned people registered in said contact information storage unit (18).

2. The sales activity support system according to claim 1, **characterized by** further comprising:

   an activity plan storage unit (16) which stores the created activity plan;
   an activity achievement storage unit (17) which stores an actually performed sales activity of a salesperson; and
   a progress management unit (13) which compares the activity plan stored in said activity plan storage unit (16) with the actually performed sales activity stored in said activity achievement storage unit (17) for each business deal, and if there is a difference between the activity plan and the actually performed sales activity, notifies the difference to a supervisor of a salesperson in charge of the business deal.

3. The sales activity support system according to claim 2, **characterized in that** in a case where said progress management unit (13) determines that there is a difference between an activity plan and an actually performed sales activity as to a given business deal, said activity plan creation unit (11) again selects an appropriate action pattern from said action pattern storage unit (15) and corrects the activity plan.

**4.** The sales activity support system according to claim 2, **characterized in that** each time actually performed sales activity information stored in said activity achievement storage unit (17) is updated, said activity plan creation unit (11) selects an appropriate action pattern from said action pattern storage unit (15), and creates an updated activity plan.

**5.** The sales activity support system according to claim 1, **characterized in that** said activity plan creation unit (11) calculates an appropriate cycle of visits for each business deal based on the performance time stored in said action pattern storage unit (15), determines a visiting date and an objective of visit for at least a next visit and visits thereafter, and notifies the determined visiting date and objective of visit to the concerned people stored in said contact information storage unit (18).

**6.** The sales activity support system according to claim 5, **characterized in that** said activity plan creation unit (11) notifies the concerned people whether to visit a client on the visiting date itself or on a later date, based on a sales activity experience and know-how of a salesperson.

**7.** A sales activity support system **characterized by** comprising:

action pattern storage means (15) for storing an action pattern made up of a work objective and a performance time which are obtained by analyzing a sales activity of a high performance salesperson; and
activity plan creation means (11) for creating an activity plan based on the work objective and performance time stored in said action pattern storage means (15) for each business deal, and notifying the created activity plan to a salesperson who is in charge of the business deal and to his/her supervisor.

**8.** A program for controlling a computer to function as:

action pattern storage means for storing an action pattern made up of a work objective and a performance time which are obtained by analyzing a sales activity of a high performance salesperson; and
activity plan creation means for creating an activity plan based on the work objective and performance time stored in said action pattern storage means for each business deal, and notifying the created activity plan to a salesperson who is in charge of the business deal and to his/her supervisor.

**9.** A computer-readable recording medium storing a program for controlling a computer to function as:

action pattern storage means for storing an action pattern made up of a work objective and a performance time which are obtained by analyzing a sales activity of a high performance salesperson; and
activity plan creation means for creating an activity plan based on the work objective and performance time stored in said action pattern storage means for each business deal, and notifying the created activity plan to a salesperson who is in charge of the business deal and to his/her supervisor.

**10.** A sales activity support system **characterized by** comprising:

a business deal information storage unit (52) which stores business deal information representing a content of a business deal client by client;
a step number calculation unit (41) which determines an importance degree of each business deal based on the business deal information, sets a client target in accordance with the importance degree of a business deal, calculates an activity plan step number representing a number of steps necessary for sales activities for the set client target, and notifies the activity plan step number to a salesperson who is in charge of the client target and to his/her manager.

**11.** The sales activity support system according to claim 10, **characterized by** further comprising a client information storage unit (49) which stores client information regarding a client,
　**characterized in that** said step number calculation unit (41) determines an importance degree of a business deal based on client information stored in said client information storage unit (49) and regarding a client corresponding to the business deal, and a scale and a success possibility of the business deal which are stored in said business deal information storage unit (52).

**12.** The sales activity support system according to claim 10, **characterized by** further comprising an action pattern storage unit (53) which stores an action pattern made up of a work objective and a performance time which are obtained by analyzing a sales activity of a high performance salesperson,

**characterized in that** said step number calculation unit (41) extracts the performance time stored in said action pattern storage unit (53), and calculates the activity plan step number by multiplying the performance time by a coefficient corresponding to a value for calculating profits and losses of each business deal.

13. The sales activity support system according to claim 10, **characterized in that** said step number calculation unit (41) determines whether or not a total of the activity plan step number for a salesperson exceeds a performable step number of the salesperson representing a number of steps performable in a predetermined period, and in a case where determining that the total of the activity plan step number exceeds the performable step number, assigns excessive steps to another suitable salesperson based on the business deal information in order to restrict the total of the activity plan step number of the salesperson to within the performable step number.

14. The sales activity support system according to claim 13, **characterized in that** said step number calculation unit (41) determines a rank representing a priority level for each business deal based on the client information and the business deal information, and sequentially excludes a business deal having a lower rank than others from the activity plan step number of the salesperson.

15. The sales activity support system according to claim 10, **characterized by** further comprising:

an activity step number storage unit (51) which stores an actually performed step number representing a number of steps actually performed by a salesperson and the activity plan step number in association with each other; and
a progress management unit (48) which determines for each business deal whether or not there is a difference between the actually performed step number and the activity plan step number, when the actually performed step number stored in said activity step number storage unit (51) is updated,

**characterized in that** in a case where said progress management unit (48) determines that there is a difference between the actually performed step number and the activity plan step number, said progress management unit (48) notifies the business deal information of the corresponding business deal to a manager of a salesperson who is in charge of the business deal.

16. A program for controlling a computer to function as:

business deal information storage means for storing business deal information representing a content of a business deal client by client;
target setting means for determining an importance degree of each business deal based on the business deal information, and setting a client target in accordance with the importance degree of a business deal;
step number calculation means for calculating an activity plan step number representing a number of steps necessary for sales activities for the set client target; and
step number distribution means for distributing the activity plan step number throughout a predetermined period.

17. A computer-readable recording medium storing a program for controlling a computer to function as:

business deal information storage means for storing business deal information representing a content of a business deal client by client;
target setting means for determining an importance degree of each business deal based on the business deal information, and setting a client target in accordance with the importance degree of a business deal;
step number calculation means for calculating an activity plan step number representing a number of steps necessary for sales activities for the set client target; and
step number distribution means for distributing the activity plan step number throughout a predetermined period.

18. A sales activity support information providing system **characterized by** comprising:

a client information storage unit (61) which stores client information including individual information representing characteristics of a client;

an example storage unit (62) which stores an example corresponding to a business deal in association with the individual information;

an input reception unit (60a) which receives an input of client information for specifying a client from a terminal (3);

an extraction unit (60b) which extracts individual information of a client corresponding to the input client information from said client information storage unit (61), and extracts an example associated with the extracted individual information from said example storage unit (62); and

a sending unit (60c) which sends sales activity support information including the extracted individual information and example to said terminal (3).

19. A sales activity support information providing system in which a terminal apparatus (3) and a server apparatus (60) for providing sales activity support information are connected through a network (1),

**characterized in that** said server apparatus (60):

is structured so as to be able to access a client information database (61) which stores client information including individual information representing characteristics of a client, and an example database (62) which stores an example corresponding to a business deal in association with the individual information; and comprises

an input reception unit (60a) which receives an input of client information for specifying a client from said terminal apparatus (3),

an extraction unit (60b) which extracts individual information of a client corresponding to the input client information from said client information database (61), and extracts an example associated with the extracted individual information from said example database (62), and

a sending unit (60c) which sends sales activity support information including the extracted individual information and example to said terminal apparatus (3).

20. The sales activity support information providing system according to claim 19, **characterized in that** said individual information includes at least one of a business field, a model type of a product used, a business scale, and an information technology introduction level representing a degree to which introduction of information technology is forwarded.

21. The sales activity support information providing system according to claim 19, **characterized in that** said server apparatus (60) registers a sales activity result input from said terminal apparatus (3) to said example database (62) as an example.

22. The sales activity support information providing system according to claim 21, **characterized in that** the example is a success example.

23. The sales activity support information providing system according to claim 19, **characterized in that** when said server apparatus (60) receives an input of client information for specifying a client from said terminal apparatus (3), said server apparatus (60) receives an input of a scheduled visiting date on which the client specified by the client information will be visited, and sends the sales activity support information to said terminal apparatus (3) before the scheduled visiting date.

24. The sales activity support information providing system according to claim 23, **characterized in that** said server apparatus (60) sends the sales activity support information on a desired sending date which is set before the scheduled visiting date in accordance with an instruction from said terminal apparatus (3).

25. The sales activity support information providing system according to claim 23, **characterized in that**:

said example database (62) stores client-related information regarding interests and concerns of a client in association with the individual information; and

said server apparatus (60) extracts client-related information of a client corresponding to client information received by said input reception unit (60a) from said example database (62), and sends the extracted client-related information to said terminal apparatus (3).

26. The sales activity support information providing system according to claim 19, **characterized in that** when said server apparatus (60) receives an input of client information for specifying a client from said terminal apparatus (3), said server apparatus (60) receives a change of a negotiation condition relating to a business deal of the client specified by the input client information, and sends sales activity support information adjusted to the changed condition to said terminal apparatus (3).

27. The sales activity support information providing system according to claim 19, **characterized in that**:

said server apparatus (60) further comprises a selection unit (60d) which selects an appropriate sales means for each client; and
said selection unit (60d) selects an appropriate sales means based on client information received by said input reception unit (60a), and provides a material for leading a client specified by the received client information to having a negotiation to the client through the selected sales means.

28. The sales activity support information providing system according to claim 27, **characterized in that** said sales means is constituted by at least one of door-to-door sales, sales through the internet, telephone, and facsimile, or combination of these.

29. The sales activity support information providing system according to claim 27, **characterized in that** when said server apparatus (60) provides the material to the client through a sales means other than door-to-door sales, said server apparatus (60) determines whether or not to classify a business deal of the client as a business deal for which a negotiation should be performed based on a reply from the client to the provided material, and in a case where determining to classify the client's business deal as a business deal for which a negotiation should be performed, sends the determination to said terminal apparatus (3).

30. A sales activity support information providing method **characterized by** comprising:

a client information storing step of storing client information including individual information representing characteristics of a client;
an example storing step of storing an example corresponding to a business deal in association with the individual information;
a client information inputting step (S1) of receiving an input of client information for specifying a client from a terminal;
an extracting step (S2) of extracting individual information of a client corresponding to the client information received in said client information inputting step (S1) from client information stored in said client information storing step, and extracting a success example corresponding to the extracted individual information from examples stored in said example storing step;
a tool generating step (S3) of generating an optimum tool representing sales activity support information including the extracted individual information and success example; and
a sending step (S6) of sending the optimum tool generated in said tool generating step (S3) to said terminal.

31. The sales activity support information providing method according to claim 30, **characterized by** further comprising:

a schedule inputting step of receiving an input of a scheduled visiting date on which a client will be visited from said terminal; and
a sending date setting step (S5) of setting a date on which the optimum tool should be sent, based on the scheduled visiting date input in said schedule inputting step,

**characterized in that** in said sending step (S6), the optimum tool is sent on a sending date set in said sending date setting step (S5).

32. A program for controlling a computer, which is structured so as to be able to access a client information database (61) storing client information including individual information representing characteristics of a client and an example database (62) storing an example corresponding to a business deal in association with the individual information, to function as:

input reception means for receiving an input of client information for specifying a client from a terminal apparatus;
extraction means for extracting individual information of a client corresponding to the received client information from said client information database (61), and extracting an example corresponding to the extracted individual information from said example database (62);
tool generation means for generating an optimum tool representing sales activity support information including the extracted individual information and example; and
sending means for sending the optimum tool to said terminal apparatus.

33. A computer readable recording medium storing a program for controlling a computer, which is structured so as to be able to access a client information database (61) storing client information including individual information representing characteristics of a client and an example database (62) storing an example corresponding to a business deal in association with the individual information, to function as:

input reception means for receiving an input of client information for specifying a client from a terminal apparatus;
extraction means for extracting individual information of a client corresponding to the received client information from said client information database (61), and extracting an example corresponding to the extracted individual information from said example database (62);
tool generation means for generating an optimum tool representing sales activity support information including the extracted individual information and example; and
sending means for sending the optimum tool to said terminal apparatus.

34. A sales activity evaluation system **characterized by** comprising:

a sales activity information storing unit (81) which stores sales activity information including achievement data relating to a business deal and/or a sales activity;
an evaluation item setting unit (80a) which sets an evaluation item for evaluating a business deal and/or a sales activity salesperson by salesperson; and
an evaluation index setting unit (80b) which sets an evaluation index representing a quantitative evaluation result for the set evaluation item salesperson by salesperson, based on the achievement data stored in said sales activity information storing unit (81),

**characterized in that** a sales activity of each salesperson is evaluated based on the set evaluation index.

35. A sales activity evaluation system in which a terminal apparatus (7, 9) and a server apparatus (80) for evaluating a sales activity of a salesperson are connected through a network (1),
**characterized in that**
said server apparatus (80):

is structured so as to be able to access a sales activity information database (81) which stores sales activity information including achievement data relating to a business deal and/or a sales activity which is input from said terminal apparatus (7);

comprises

an evaluation item setting unit (80a) which sets an evaluation item for evaluating a business deal and/or a sales activity salesperson by salesperson, and
an evaluation index setting unit (80b) which sets an evaluation index representing a quantitative evaluation result for the set evaluation item salesperson by salesperson, based on the achievement data stored in said sales activity information database (81); and
evaluates a sales activity of each salesperson based on the set evaluation index.

36. The sales activity evaluation system according to claim 35, **characterized in that** said evaluation index setting unit (80b) sets the evaluation index for an evaluation item relating to a business deal which is set by said evaluation item setting unit (80a), based on achievement data relating to the business deal which is stored in said sales activity information database (81).

37. The sales activity evaluation system according to claim 35, **characterized in that**:

said server apparatus (80) is structured so as to be able to access an individual information database (82) which stores individual information representing attribute information of each salesperson; and
said evaluation index setting unit (80b) sets the evaluation index for the evaluation item, based on achievement data relating to a predetermined business deal which is stored in said sales activity information database (81) and individual information stored in said individual information database (82).

**38.** The sales activity evaluation system according to claim 35, **characterized in that** said evaluation index setting unit (80b) sets the evaluation index for an evaluation item relating to a sales activity which is set by said evaluation item setting unit (80a), based on achievement data relating to the sales activity which is stored in said sales activity information database (81).

**39.** The sales activity evaluation system according to claim 35,
    **characterized in that** said server apparatus (80):

further comprises an activity pattern generation unit (80c) which extracts achievement data corresponding to an evaluation item set by said evaluation item setting unit (80a) from among achievement data relating to a sales activity of each salesperson stored in said sales activity information database (81), and generates an activity pattern representing a content of an activity to be performed by the salesperson based on the extracted achievement data; and
classifies the activity pattern generated by said activity pattern generation unit (80c) based on a result of a sales activity corresponding to the activity pattern, and stores the classified activity pattern in said sales activity information database (81) salesperson by salesperson.

**40.** The sales activity evaluation system according to claim 39, **characterized in that**:

said server apparatus (80) extracts an activity pattern of a successful sales activity from among activity patterns stored in said sales activity information database (81); and
said evaluation index setting unit (80b) sets the evaluation index for an evaluation item included in the extracted activity pattern.

**41.** The sales activity evaluation system according to claim 39, **characterized in that** said evaluation index setting unit (80b) sets the evaluation index for an evaluation item set by said evaluation item setting unit (80a), based on achievement data relating to a sales activity which is stored in said sales activity information database (81) and individual information stored in said individual information database (82).

**42.** The sales activity evaluation system according to claim 40, **characterized in that** said server apparatus (80) further comprises a determination unit (80d) which determines whether or not an activity pattern generated by said activity pattern generation unit (80c) needs to be corrected, based on an evaluation index set for an evaluation item included in the activity pattern.

**43.** The sales activity evaluation system according to claim 42, **characterized in that** in a case where said determination unit (80d) determines that the activity pattern needs to be corrected, said server apparatus (80) sends alarm information for prompting correction of the activity pattern of a corresponding salesperson to said terminal apparatus (7,9).

**44.** The sales activity evaluation system according to claim 42, **characterized in that**:

said server apparatus (80) is structured so as to be able to access an improvement information database (83) which stores improvement information representing a measure for improving a sales activity corresponding to the activity pattern generated by said activity pattern generation unit (80c); and
in a case where said determination unit (80d) determines that the activity pattern needs to be corrected, said server apparatus (80) extracts the improvement information corresponding to the activity pattern from said improvement information database (83), and sends the extracted improvement information to said terminal apparatus (7, 9).

**45.** The sales activity evaluation system according to claim 35, **characterized in that** said server apparatus (80) sends an evaluation result for a business deal and/or a sales activity which includes an evaluation item for which an evaluation index is set by said evaluation index setting unit (80b), to said terminal apparatus (7, 9).

**46.** A sales activity evaluation method **characterized by** comprising:

a sales activity information storing step (S11, S21) of storing sales activity information including achievement data relating to a business deal and/or a sales activity;

an evaluation item setting step of setting an evaluation item for evaluating a business deal and/or a sales activity salesperson by salesperson;

an evaluation index setting step of setting an evaluation index representing a quantitative evaluation result for an evaluation item set in said evaluation item setting step salesperson by salesperson, based on the achievement data stored in said sales activity information storing step (S11, S21); and

a step of evaluating a sales activity of each salesperson based on an evaluation index set in said evaluation index setting step.

**47.** The sales activity evaluation method according to claim 46, **characterized by** further comprising an individual information acquiring step (S13, S23) of acquiring individual information representing attribute information of each salesperson,

**characterized in that** in said evaluation index setting step, the evaluation index is set based on the achievement data stored in said sales activity information storing step (S11, S21) and the individual information acquired in said individual information acquiring step (S13,S23).

**48.** A program for controlling a computer, which is structured so as to be able to access a sales activity information database (81) which stores sales activity information including achievement data relating to a business deal and/or a sales activity and an individual information database (82) which stores individual information representing attribute information of each salesperson, to function as:

evaluation item setting means for setting an evaluation item for evaluating a business deal and/or a sales activity salesperson by salesperson;

extraction means for extracting achievement data of a predetermined salesperson from said sales activity information database (81), and extracting individual information of the salesperson from said individual information database (82);

evaluation index setting means for setting an evaluation index representing a quantitative evaluation result for the set evaluation item salesperson by salesperson, based on the extracted achievement data and individual information; and

evaluation means for evaluating a sales activity of each salesperson based on the set evaluation index.

**49.** A computer-readable recording medium storing a program for controlling a ) computer, which is structured so as to be able to access a sales activity information database (81) which stores sales activity information including achievement data relating to a business deal and/or a sales activity and an individual information database (82) which stores individual information representing attribute information of each salesperson, to function as:

evaluation item setting means for setting an evaluation item for evaluating a business deal and/or a sales activity salesperson by salesperson;

extraction means for extracting achievement data of a predetermined salesperson from said sales activity information database (81), and extracting individual information of the salesperson from said individual information database (82);

evaluation index setting means for setting an evaluation index representing a quantitative evaluation result for the set evaluation item salesperson by salesperson, based on the extracted achievement data and individual information; and

evaluation means for evaluating a sales activity of each salesperson based on the set evaluation index.

# Fig.1

Sales-person **20**

Sales-person **20**

**10**

Sales Activity Support System

Client DB **14**

Action Pattern DB **15**

Contact Information DB **18**

Activity Plan Creation Unit **11**

Information Collection/ Registration Unit **12**

Progress Management Unit **13**

Activity Plan DB **16**

Activity Achievement DB **17**

Supervisor **30**

# Fig.2

Daily Input

Sales Activity Support Server

Salesperson

Supervisor

Presentation
of Activity Plan to
Salesperson

Data Cumulated by
Daily Activities

Creation of Activity Plan

Optimum Cycle of Visits Is
Calculated for Each Client and
Notified to Salesperson in
Charge for Each Visit.

Database

Action Pattern of High
Performance Salesperson
Is Extracted.

# Fig.3

Daily Input (Result of Visit Is Registered)

Specialized Salesperson,etc

Notification to Specialized Salesperson and Other Staff Members If Necessary

Sales Activity Support Server

Salesperson

Presentation of Activity Plan to Salesperson

Supervisor

Data Cumulated by Daily Activities

Creation of Activity Plan

Determination of Whether to Visit Visiting Destination on Planed Date or to Visit Visiting Destination on Later Date Is Performed Based on Cumulated Information, Sales Activity Experience and Know-how. Result of Visit Is Known.

Database

# Fig.4

# Fig.5

Sales Activity Support System (40)

Salesperson (20)
Salesperson (20)

Client DB (49)

Step Number Calculation Unit (41)
- Target Setting Unit (42)
- P/L Calculation Unit (43)
- Step Number Distribution Unit (44)
- Step Number Redistribution Unit (45)
- Notification Unit (46)

Business Deal DB (52)

Product DB (50)

Action Pattern DB (53)

Sales Relation DB (51)

Activity Achievement DB (54)

Achievement Registration Unit (47)

Progress Management Unit (48)

Manager (30)

Salesperson : ☆☆ △▽▲   First Half of Year 20xx

| No. | Rank | Target | Product | Business Deal Number | Maturity Level | P/L | Step Number (Number of Days) | | | | | | Total |
|---|---|---|---|---|---|---|---|---|---|---|---|---|---|
| | | | | | | | April | May | June | July | August | September | |
| 1 | 5 | A Company | MFP | 001 | 8 | 10999 | ◯ | ◯ | ◯ | | | | ◯ |
| 2 | 5 | B Company | Copier | 002 | 6 | 9999 | ◯ | ◯ | ◯ | ◯ | ◯ | ◯ | ◯ |
| 3 | 4 | C Company | FAX | 003 | 7 | 3000 | ◯ | ◯ | ◯ | ◯ | | | ◯ |
| . | . | . | . | . | . | . | . | . | . | . | . | . | . |
| | | | | | | Total | ◯ | ◯ | ◯ | ◯ | ◯ | ◯ | ◯ |
| | | | | | | Number of Business Days | ☐ | ☐ | ☐ | ☐ | ☐ | ☐ | ☐ |

Fig.6

# Fig.7

Sales Activity Support Server

Daily Input

Salesperson

Manager

Target Setting
Client to Be Visited Is Notified.

Data Cumulated by Daily Activities

Corporate Information Is Cumulated.

Database

# Fig.8

Client's P/L Is
Calculated

Daily Input

Client
Database

Sales Activity Support
Server

Salesperson

Sales Information

Target Setting

Manager

Data Cumulated by
Daily Activities

Step Number (Time) to
Be Spent on Each
Client Is Notified
(Client Target Is
Transferred to Another
Salesperson by
Distribution of Step
Number).

Database

EP 1 380 981 A1

Fig.9

# Fig.10

70

**Optimum Tool**

71

Individual Information ⇒ User Name : AB Electronics

71a — Business Field : Manufacturing Industry

71b — Used Machine Model (Including Number of Machines) :

PPC (A Company PP2002)

FAX (B Company FA202)

PC (C Company PC22)

⋮

71c — Scale (Number of Employees) : 400 Employees

71d — Information Technology Introduction Level : Level A

72

Example

Example A ⇒ User Name: CD Electronics

Example B ⇒ User Name: EF Manufacturing

72a

73

Client-Related Information

Keyword          Sales Talk

73a          73b

Fig.11

# Fig.12

Sales Activity Support Information
Providing Operation

**S1**
Salesperson Registers Information on
Target Client in SFA Server

**S2**
SFA Server Extracts Individual Information from Client
DB and Success Example from Success Example DB

**S3**
Tool DB Server Generates Optimum Tool Suited to Client
and Including Individual Information and Success Example

**S4** Scheduled Date
of Visit Is Input? — NO

YES

**S5**
SFA Server Sets Date for Sending Optimum Tool

**S6**
SFA Server Sends Optimum Tool to Salesperson

YES **S7** Is There Any Client
to Be Targeted?

NO

END

Fig.13

Fig.14

EP 1 380 981 A1

Server Apparatus — 80

- 80a — Evaluation Item Setting Unit
- 80b — Evaluation Index Setting Unit
- 80c — Activity Pattern Generation Unit
- 80d — Detrmination Unit

80

81 — Sales Activity Information DB

82 — Individual Information DB

83 — Improvement Information DB

Evaluation Index
Alarm Information

1

Evaluation Index
Alarm Information

Sales Actvity Information
Individual Information

9

8

Manager

7

6

Salesperson

# Fig.15

| Classi-fication | KPI Items | Evaluation Methods |
|---|---|---|
| Negotiation Maturity Level Management (Business Deal Management) | Number of Registered Negotiations at Each Start Time Maturity Level | Adding Up Negotiations at Each Negotiation Maturity Level |
| | Number of Created Maturity Level Achieving Plans at Each Start Time Maturity Level | Adding Up Business Deals for Which Maturity Level Achieving Plan Is Created |
| | Number of Negotiations Falling Behind Plan | |
| | Number of Stagnant Negotiations | |
| | Number of Performed Maturity Level Achieving Steps | |
| | Expected Achievement and Time for Negotiation in Progress to Land | |
| | Lead Time at Each Start Time Maturity Level | |
| | Number of Successful Negotiations at Each Start Time Maturity Level | |
| Activity Management | Registered Time Spent on Each Type of Activity | Adding Up Times Spent on Each Type of Activity |
| | Activity Result Registration Rate for Each Type of Activity | Number of Input Activity Results /Total Number |
| | Rate of Negotiation-Related Activities | |
| | Number of Activity Steps for Each Negotiation Scale | |
| | Rate of Setting Priority of Clients | |
| | Number of Generated Client Winning Scenarios | |
| | Number of Activity Steps for Each Priority Level | |

# Fig.16

Fig.17

**KPI for Activity (Example)**

- Client Visit Rate
- Achievement Result Registration Rate
- Rate of Activities Inside Office to Activities Outiside Office
- Gap
- Number of Activity Steps for Each Priority Level
- Rate of Activities for Business Deal to Activities for Other Purposes

80

84 — SFA Server

(S21)

Daily Input

(S25)

(S25)

Salesperson — 6, 7

Data Cumulated by Daily Activities

KPI Is Sent Automatically Alarm Is Sent in Case of Bad Activity Pattern

(S22)  (S24)

Manager — 9, 8

82 — Individual Information DB

Activity Pattern in Case of Success in Sales Is Extracted

(S23)

85 — DB Server

Generation of KPI for Activity

KPI (Index) Is Set for Each Salesperson
KPI Item Is Unique to Each Salesperson
Alarm Is Sent in Case of Pattern Leading to Bad Work Performance

Skill of Salesperson, Situation in Assigned District, etc

**European Patent Office**

**DECLARATION**

which under Rule 45 of the European Patent Convention shall be considered, for the purposes of subsequent proceedings, as the European search report

**Application Number**

EP 03 01 5571

| The Search Division considers that the present application, does not comply with the provisions of the EPC to such an extent that it is not possible to carry out a meaningful search into the state of the art on the basis of all claims | **CLASSIFICATION OF THE APPLICATION (Int.Cl.7)** |
|---|---|
| Reason: | G06F17/60 |

The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-6.

The applicant's attention is drawn to the fact that a search may be carried out during examination following a declaration of no search under Rule 45 EPC, should the problems which led to the declaration being issued be overcome (see EPC Guideline C-VI, 8.5).

---
-----

| Place of search | Date | Examiner |
|---|---|---|
| THE HAGUE | 19 September 2003 | Pinheiro, T. |

EPO FORM 1504 (P04C37)